# EUROPEAN PATENT APPLICATION

(11) **EP 4 836 506 A1**
(43) Date of publication of application: **04.11.2026**
(21) Application number: 24910863.0
(22) Date of filing: 18.12.2024
(51) Int. Cl.: H04W 24/10

(54) **L1 MEASUREMENT RESULT PROCESSING METHOD AND APPARATUS AND RELATED DEVICE**

(30) Priority: 25.12.2023 CN 202311799839
(71) Applicant: Vivo Mobile Communication Co., Ltd., Dongguan, Guangdong 523863 (CN)
(72) Inventor: WANG, Yangyang, Dongguan, Guangdong 523863 (CN); BAO, Wei, Dongguan, Guangdong 523863 (CN); CHEN, Li, Dongguan, Guangdong 523863 (CN); SUN, Yanliang, Dongguan, Guangdong 523863 (CN); WANG, Chenxi, Dongguan, Guangdong 523863 (CN)
(74) Representative: Lavoix
(86) International application number: PCT/CN2024/140180
(87) International publication number: WO 2025/139932

(57) **Abstract**

This application discloses a method and an apparatus for processing L1 measurement results, and a related device, and pertains to the field of communication technologies. The method for processing L1 measurement results in embodiments of this application includes: in a case that the number of valid L1 measurement results of reference signals from cells corresponding to L1 resource configuration information associated with a reporting occasion is less than or equal to a preset reporting number, including, by a terminal, first content in a first L1 measurement report associated with the reporting occasion, where the first content is used to indicate invalid L1 measurement results in the first L1 measurement report.

## Description

### CROSS-REFERENCE TO RELATED APPLICATIONS

This application claims priority to Chinese Patent Application No. 202311799839.1 filed in China on December 25, 2023, the entire contents of which are incorporated herein by reference.

### TECHNICAL FIELD

This application pertains to the field of communication technologies, and specifically relates to a method and an apparatus for processing L1 measurement results, and a related device.

### BACKGROUND

Currently, layer 1 (Layer1, L1) measurement results reported by user equipment (User Equipment, UE) are L1 measurement results corresponding to a serving cell. Layer 1 and layer 2 triggered handover (L1/L2-Triggered Mobility, LTM) is introduced in the related art. For the LTM procedure, UE may perform L1 measurement on a neighboring cell associated with an LTM report configuration. However, in some scenarios, part or all of neighboring cells associated with the LTM report configuration may not be able to perform L1 measurement, and thus the terminal cannot obtain valid L1 measurement results for this part of neighboring cells, that is, this part of neighboring cells has no valid L1 measurement results. However, the size of a current L1 measurement report is pre-configured by a network-side device. If the number of valid L1 measurement results of the terminal is less than the number configured by the network, it is necessary to determine a method such that the terminal reports an L1 measurement report in this case and the network-side device can learn the valid L1 measurement results of cells in the L1 measurement report.

### SUMMARY

Embodiments of this application provide a method and an apparatus for processing L1 measurement results, and a related device, which can solve the problem of how a terminal reports in a case that the terminal cannot obtain valid L1 measurement results of neighboring cells associated with a report configuration, so that a network-side device can learn valid L1 measurement results in an L1 measurement report.

According to a first aspect, a method for processing L1 measurement results is provided, including:
in a case that the number of valid L1 measurement results of reference signals from cells corresponding to L1 resource configuration information associated with a reporting occasion is less than or equal to a preset reporting number, including, by a terminal, first content in a first L1 measurement report associated with the reporting occasion, where the first content is used to indicate invalid L1 measurement results in the first L1 measurement report.

According to a second aspect, a method for processing L1 measurement results is provided, including:
obtaining, by a network-side device, a first L1 measurement report, where the first L1 measurement report includes first content, and the first content is used to indicate invalid L1 measurement results in the first L1 measurement report.

According to a third aspect, a method for processing L1 measurement results is provided, including:
sending, by a terminal, a second L1 measurement report; where
the second L1 measurement report includes at least one of the following:
   indication information indicating whether a cell associated with an L1 report configuration has a valid L1 measurement result;
   an L1 measurement result of a reference signal from a cell having a valid L1 measurement result; and
   the number of valid L1 measurement results of reference signals from a cell associated with an L1 report configuration or indication information indicating whether a reference signal associated with the cell has a valid L1 measurement result.

According to a fourth aspect, a method for processing L1 measurement results is provided, including:
in a case that an L3 measurement result of a serving cell is not lower than a threshold associated with a serving cell measurement configuration, and the neighboring cell is a candidate cell associated with L1 measurement, performing, by a terminal, L3 measurement on the neighboring cell.

Optionally, the performing, by a terminal, L3 measurement on the neighboring cell includes at least one of the following:
performing L3 measurement on the neighboring cell based on a first measurement cycle, where the first measurement cycle is greater than a second measurement cycle, the second measurement cycle is an original measurement cycle corresponding to second L3 measurement configuration information, the first measurement cycle is a cycle configured by a network, agreed by a protocol, or determined based on UE implementation, and the second L3 measurement configuration information includes a measurement object and a report configuration associated with the measurement object;
performing measurement on an L3 measurement frequency point on which a neighboring cell is; and
ignoring a threshold included in the serving cell measurement configuration.

Optionally, after the performing, by a terminal, L3 measurement on the neighboring cell, the method further includes:
skipping reporting or skipping triggering reporting of an L3 measurement result corresponding to L3 measurement of the neighboring cell.

According to a fifth aspect, a method for processing L1 measurement results is provided, including:
performing, by the terminal, L3 measurement on a cell or frequency point associated with L1 measurement configuration information according to a preconfigured cycle or a cycle agreed by a protocol or based on UE implementation; or
performing L3 measurement according to first L3 measurement configuration information, where the first L3 measurement configuration information is L3 measurement configuration information corresponding to L1 resource configuration information associated with L1 report configuration information included in a serving cell of the terminal.

Optionally, the performing L3 measurement according to first L3 measurement configuration information includes:
in a case that a frequency point included in the first L3 measurement configuration information overlaps with a frequency point included in second L3 measurement configuration information, and the terminal has performed L3 measurement according to the second L3 measurement configuration information, performing L3 measurement according to a frequency point in the first L3 measurement configuration information that does not overlap with the frequency point of the second L3 measurement configuration information, where the second L3 measurement configuration information includes a measurement object and a report configuration associated with the measurement object.

Optionally, the first L3 measurement configuration information includes at least one of the following:
a candidate cell identifier;
frequency domain information of a reference signal, where the frequency domain information includes frequency point information;
time domain information of a reference signal or an L3 measurement cycle; and
a measurement quantity, where the measurement quantity is used to indicate a measurement quantity of a reference signal measured by a terminal.

Optionally, a candidate cell identifier included in the first L3 measurement configuration information is the same as a cell identifier in the L1 resource configuration information, or frequency point information included in the first L3 measurement configuration information is the same as frequency point information in the L1 resource configuration information.

According to a sixth aspect, a method for processing L1 measurement results is provided, including:
in a case that a measurement object or report configuration associated with a target frequency point is configured in second L3 measurement configuration information, performing, by the terminal, L3 measurement according to a first measurement cycle or based on a first measurement cycle and a second measurement cycle, where the second measurement cycle is an original measurement cycle corresponding to the second L3 measurement configuration information, the first measurement cycle is greater than the second measurement cycle, the first measurement cycle is a cycle configured by a network, agreed by a protocol, or determined based on UE implementation, the second L3 measurement configuration information includes a measurement object and a report configuration associated with the measurement object, and the target frequency point is a frequency point corresponding to L1 measurement configuration information associated with a serving cell.

Optionally, the performing L3 measurement according to a first measurement cycle or based on a first measurement cycle and a second measurement cycle includes at least one of the following:
in a case that first control signaling has been received, performing L3 measurement according to the first measurement cycle or according to the first measurement cycle and the second measurement cycle, where the first control signaling is used to indicate the terminal to perform L3 measurement based on the first measurement cycle; and
performing L3 measurement according to the first measurement cycle within a first part duration of a third measurement cycle, and performing L3 measurement according to the second measurement cycle within a second part duration of the third measurement cycle.

Optionally, the performing L3 measurement according to a first measurement cycle includes at least one of the following:
performing L3 measurement on a serving cell according to the first measurement cycle; and
performing L3 measurement on a neighboring cell using a same radio access technology intra-RAT according to the first measurement cycle.

Optionally, a start time of the third measurement cycle is a time at which the terminal receives L1 measurement configuration information or L1 report configuration information, or a time at which the terminal receives the first control signaling, or a time derived by the terminal according to a message including the third measurement cycle, where the first control signaling is used to indicate the terminal to perform L3 measurement based on the first measurement cycle.

Optionally, after the performing L3 measurement according to a first measurement cycle or based on a first measurement cycle and a second measurement cycle, the method further includes:
skipping reporting an L3 measurement result corresponding to the L3 measurement.

According to a seventh aspect, a method for processing L1 measurement results is provided, including:
obtaining, by a network-side device, a second L1 measurement report;
   where
the second L1 measurement report includes at least one of the following:
   indication information indicating whether a cell associated with an L1 report configuration has a valid L1 measurement result;
   an L1 measurement result of a reference signal from a cell having a valid L1 measurement result; and
   the number of valid L1 measurement results of reference signals from a cell associated with an L1 report configuration or indication information indicating whether a reference signal associated with the cell has a valid L1 measurement result.

According to an eighth aspect, an apparatus for processing L1 measurement results is provided, including:
a first processing module, configured to: in a case that the number of valid L1 measurement results of reference signals from cells corresponding to L1 resource configuration information associated with a reporting occasion is less than or equal to a preset reporting number, include first content in a first L1 measurement report associated with the reporting occasion, where the first content is used to indicate invalid L1 measurement results in the first L1 measurement report.

According to a ninth aspect, an apparatus for processing L1 measurement results is provided, including:
a first obtaining module, configured to obtain a first L1 measurement report, where the first L1 measurement report includes first content, and the first content is used to indicate invalid L1 measurement results in the first L1 measurement report.

According to a tenth aspect, an apparatus for processing L1 measurement results is provided, including:
a sixth sending module, configured to send a second L1 measurement report;
   where
the second L1 measurement report includes at least one of the following:
   indication information indicating whether a cell associated with an L1 report configuration has a valid L1 measurement result;
   an L1 measurement result of a reference signal from a cell having a valid L1 measurement result; and
   the number of valid L1 measurement results of reference signals from a cell associated with an L1 report configuration or indication information indicating whether a reference signal associated with the cell has a valid L1 measurement result.

According to an eleventh aspect, an apparatus for processing L1 measurement results is provided, including:
a fourth measurement module, configured to: in a case that an L3 measurement result of a serving cell is not lower than a threshold associated with a serving cell measurement configuration, and a neighboring cell is a candidate cell associated with L1 measurement, perform L3 measurement on the neighboring cell.

Optionally, the fourth measurement module is configured to perform at least one of the following:
performing L3 measurement on the neighboring cell based on a first measurement cycle, where the first measurement cycle is greater than a second measurement cycle, the second measurement cycle is an original measurement cycle corresponding to second L3 measurement configuration information, the first measurement cycle is a cycle configured by a network, agreed by a protocol, or determined based on UE implementation, and the second L3 measurement configuration information includes a measurement object and a report configuration associated with the measurement object;
performing measurement on an L3 measurement frequency point on which a neighboring cell is; and
ignoring a threshold included in the serving cell measurement configuration.

Optionally, the apparatus in the embodiments of this application further includes:
a sixth processing module, configured to skip reporting or skip triggering reporting of an L3 measurement result corresponding to L3 measurement of the neighboring cell.

According to a twelfth aspect, an apparatus for processing L1 measurement results is provided, including:
a fifth measurement module, configured to perform L3 measurement on a cell or frequency point associated with L1 measurement configuration information according to a preconfigured cycle or a cycle agreed by a protocol or based on UE implementation; or
perform L3 measurement according to first L3 measurement configuration information, where the first L3 measurement configuration information is L3 measurement configuration information corresponding to L1 resource configuration information associated with L1 report configuration information included in a serving cell of the terminal.

Optionally, the fifth measurement module is configured to:
in a case that a frequency point included in the first L3 measurement configuration information overlaps with a frequency point included in second L3 measurement configuration information, and the terminal has performed L3 measurement according to the second L3 measurement configuration information, perform L3 measurement according to a frequency point in the first L3 measurement configuration information that does not overlap with the frequency point of the second L3 measurement configuration information, where the second L3 measurement configuration information includes a measurement object and a report configuration associated with the measurement object.

Optionally, the first L3 measurement configuration information includes at least one of the following:
a candidate cell identifier;
frequency domain information of a reference signal, where the frequency domain information includes frequency point information;
time domain information of a reference signal or an L3 measurement cycle; and
a measurement quantity, where the measurement quantity is used to indicate a measurement quantity of a reference signal measured by a terminal.

Optionally, a candidate cell identifier included in the first L3 measurement configuration information is the same as a cell identifier in the L1 resource configuration information, or frequency point information included in the first L3 measurement configuration information is the same as frequency point information in the L1 resource configuration information.

According to a thirteenth aspect, an apparatus for processing L1 measurement results is provided, including:
a sixth measurement module, configured to: in a case that a measurement object or report configuration associated with a target frequency point is configured in second L3 measurement configuration information, perform L3 measurement according to a first measurement cycle or based on a first measurement cycle and a second measurement cycle, where the second measurement cycle is an original measurement cycle corresponding to the second L3 measurement configuration information, the first measurement cycle is greater than the second measurement cycle, the first measurement cycle is a cycle configured by a network, agreed by a protocol, or determined based on UE implementation, the second L3 measurement configuration information includes a measurement object and a report configuration associated with the measurement object, and the target frequency point is a frequency point corresponding to L1 measurement configuration information associated with a serving cell.

Optionally, the sixth measurement module is configured to perform at least one of the following:
in a case that first control signaling has been received, performing L3 measurement according to the first measurement cycle or according to the first measurement cycle and the second measurement cycle, where the first control signaling is used to indicate the terminal to perform L3 measurement based on the first measurement cycle; and
performing L3 measurement according to the first measurement cycle within a first part duration of a third measurement cycle, and performing L3 measurement according to the second measurement cycle within a second part duration of the third measurement cycle.

Optionally, the sixth measurement module is configured to perform at least one of the following:
performing L3 measurement on a serving cell according to the first measurement cycle; and
performing L3 measurement on a neighboring cell using a same radio access technology intra-RAT according to the first measurement cycle.

Optionally, a start time of the third measurement cycle is a time at which the terminal receives L1 measurement configuration information or L1 report configuration information, or a time at which the terminal receives the first control signaling, or a time derived by the terminal according to a message including the third measurement cycle, where the first control signaling is used to indicate the terminal to perform L3 measurement based on the first measurement cycle.

Optionally, the apparatus in the embodiments of this application further includes:
a seventh processing module, configured to, after the sixth measurement module performs L3 measurement according to the first measurement cycle or based on the first measurement cycle and the second measurement cycle, skip reporting an L3 measurement result corresponding to the L3 measurement.

According to a fourteenth aspect, an apparatus for processing L1 measurement results is provided, including:
a fourth obtaining module, configured to obtain a second L1 measurement report; where
the second L1 measurement report includes at least one of the following:
   indication information indicating whether a cell associated with an L1 report configuration has a valid L1 measurement result;
   an L1 measurement result of a reference signal from a cell having a valid L1 measurement result; and
   the number of valid L1 measurement results of reference signals from a cell associated with an L1 report configuration or indication information indicating whether a reference signal associated with the cell has a valid L1 measurement result.

According to a fifteenth aspect, a terminal is provided, including a processor and a memory. The memory stores a program or an instruction executable on the processor, and when the program or instruction is executed by the processor, the steps of the method according to the first aspect, the second aspect, the third aspect, the fourth aspect, the fifth aspect, or the sixth aspect are implemented.

According to a sixteenth aspect, a terminal is provided, including a processor and a communication interface. The processor is configured to: in a case that the number of valid L1 measurement results of reference signals from cells corresponding to L1 resource configuration information associated with a reporting occasion is less than or equal to a preset reporting number, include first content in a first L1 measurement report associated with the reporting occasion, where the first content is used to indicate invalid L1 measurement results in the first L1 measurement report;
the communication interface is configured to send a second L1 measurement report; where the second L1 measurement report includes at least one of the following: indication information indicating whether a cell associated with an L1 report configuration has a valid L1 measurement result; an L1 measurement result of a reference signal from a cell having a valid L1 measurement result; and the number of valid L1 measurement results of reference signals from a cell associated with an L1 report configuration or indication information indicating whether a reference signal associated with the cell has a valid L1 measurement result;
the processor is configured to: in a case that an L3 measurement result of a serving cell is not lower than a threshold associated with a serving cell measurement configuration, and the neighboring cell is a candidate cell associated with L1 measurement, perform L3 measurement on the neighboring cell;
the processor is configured to perform L3 measurement on a cell or frequency point associated with L1 measurement configuration information according to a preconfigured cycle or a cycle agreed by a protocol or based on UE implementation; or perform L3 measurement according to first L3 measurement configuration information, where the first L3 measurement configuration information is L3 measurement configuration information corresponding to L1 resource configuration information associated with L1 report configuration information included in a serving cell of the terminal; or
the processor is configured to: in a case that a measurement object or report configuration associated with a target frequency point is configured in second L3 measurement configuration information, perform L3 measurement according to a first measurement cycle or based on a first measurement cycle and a second measurement cycle, where the second measurement cycle is an original measurement cycle corresponding to the second L3 measurement configuration information, the first measurement cycle is greater than the second measurement cycle, the first measurement cycle is a cycle configured by a network, agreed by a protocol, or determined based on UE implementation, the second L3 measurement configuration information includes a measurement object and a report configuration associated with the measurement object, and the target frequency point is a frequency point corresponding to L1 measurement configuration information associated with a serving cell.

According to a seventeenth aspect, a network-side device is provided, and the network-side device includes a processor and a memory. The memory stores a program or an instruction executable on the processor, and when the program or instruction is executed by the processor, the steps of the method according to the second aspect or the seventh aspect are implemented.

According to an eighteenth aspect, a network-side device is provided, including a processor and a communication interface. The communication interface is configured to obtain a first L1 measurement report, where the first L1 measurement report includes first content, and the first content is used to indicate invalid L1 measurement results in the first L1 measurement report; or the communication interface is configured to obtain a second L1 measurement report, where the second L1 measurement report includes at least one of the following: indication information indicating whether a cell associated with an L1 report configuration has a valid L1 measurement result; an L1 measurement result of a reference signal from a cell having a valid L1 measurement result; and the number of valid L1 measurement results of reference signals from a cell associated with an L1 report configuration or indication information indicating whether a reference signal associated with the cell has a valid L1 measurement result.

According to a nineteenth aspect, a readable storage medium is provided, where the readable storage medium stores a program or an instruction, and when the program or instruction is executed by a processor, the steps of the method according to any one of the first aspect to the seventh aspect are implemented.

According to a twentieth aspect, a system for processing L1 measurement results is provided, including: a terminal and a network-side device, where the terminal can be configured to perform the steps of the method according to any one of the first aspect to the seventh aspect.

According to a twenty-first aspect, a chip is provided, where the chip includes a processor and a communication interface. The communication interface and the processor are coupled, and the processor is configured to run a program or an instruction to implement the method according to any one of the first aspect to the seventh aspect.

According to a twenty-second aspect, a computer program/program product is provided, where the computer program/program product is stored in a storage medium. The computer program/program product is executed by at least one processor to implement the steps of the method according to any one of the first aspect to the seventh aspect.

In the embodiments of this application, in a case that the number of valid L1 measurement results of reference signals from cells corresponding to the L1 resource configuration information associated with the reporting occasion is less than or equal to the preset reporting number, the terminal includes the first content in the first L1 measurement report associated with the reporting occasion, where the first content is used to indicate the invalid L1 measurement results in the first L1 measurement report. With the first content, a network side can learn the invalid L1 measurement results in the first L1 measurement report, and thus can determine L1 measurement results in the first L1 measurement report other than the invalid L1 measurement results as valid L1 measurement results, ensuring consistency in L1 measurement result understanding between the network side and the terminal.

### BRIEF DESCRIPTION OF DRAWINGS

FIG. 1 is a structural diagram of a communication system to which an embodiment of this application can be applied;
FIG. 2 is a first schematic flowchart of a method for processing L1 measurement results in an embodiment of this application;
FIG. 3 is a second schematic flowchart of a method for processing L1 measurement results in an embodiment of this application;
FIG. 4 is a third schematic flowchart of a method for processing L1 measurement results in an embodiment of this application;
FIG. 5 is a fourth schematic flowchart of a method for processing L1 measurement results in an embodiment of this application;
FIG. 6 is a fifth schematic flowchart of a method for processing L1 measurement results in an embodiment of this application;
FIG. 7 is a sixth schematic flowchart of a method for processing L1 measurement results in an embodiment of this application;
FIG. 8 is a seventh schematic flowchart of a method for processing L1 measurement results in an embodiment of this application;
FIG. 9 is a first schematic module diagram of an apparatus for processing L1 measurement results in an embodiment of this application;
FIG. 10 is a second schematic module diagram of an apparatus for processing L1 measurement results in an embodiment of this application;
FIG. 11 is a third schematic module diagram of an apparatus for processing L1 measurement results in an embodiment of this application;
FIG. 12 is a fourth schematic module diagram of an apparatus for processing L1 measurement results in an embodiment of this application;
FIG. 13 is a fifth schematic module diagram of an apparatus for processing L1 measurement results in an embodiment of this application;
FIG. 14 is a sixth schematic module diagram of an apparatus for processing L1 measurement results in an embodiment of this application;
FIG. 15 is a seventh schematic module diagram of an apparatus for processing L1 measurement results in an embodiment of this application;
FIG. 16 is a structural block diagram of a communication device in an embodiment of this application;
FIG. 17 is a structural block diagram of a terminal in an embodiment of this application; and
FIG. 18 is a structural block diagram of a network-side device in an embodiment of this application.

### DESCRIPTION OF EMBODIMENTS

The technical solutions in the embodiments of this application will be clearly described below in conjunction with the accompanying drawings in the embodiments of this application. Obviously, the described embodiments are some not all of the embodiments of this application. All other embodiments obtained by those of ordinary skill in the art based on the embodiments in this application belong to the protection scope of this application.

The terms "first", "second", and the like in this application are used to distinguish between similar objects and are not used to describe a specific order or sequence. It should be understood that the terms used in this way can be interchanged as appropriate, so that the embodiments of this application can be implemented in sequences other than those illustrated or described herein, and the objects distinguished by "first" and "second" are usually of one type, and the number of objects is not limited. For example, the first object may be one or more. In addition, "or" in this application indicates at least one of the connected objects. For example, "A or B" covers three scenarios. Scenario one: including A but not including B; scenario two: including B but not including A; scenario three: including both A and B. The character "/" generally indicates that the preceding and following associated objects are in an "or" relationship.

The term "indication" in this application can be either a direct indication (or an explicit indication) or an indirect indication (or an implicit indication). The direct indication can be understood as follows: a sender explicitly informs a receiver of specific information, an operation to be executed, a request result, or the like in a sent indication. The indirect indication can be understood as follows: a receiver determines corresponding information or performs judgment according to an indication sent by a sender, and determines an operation to be executed, a request result, or the like according to the judgment result.

It is worth pointing out that the technology described in the embodiments of this application is not limited to long term evolution (Long Term Evolution, LTE)/LTE-advanced (LTE-Advanced, LTE-A) systems, but can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), or other systems. The terms "system" and "network" in the embodiments of this application are often used interchangeably, and the described technology can be used not only in the above-mentioned systems and radio technologies, but also in other systems and radio technologies. The following description describes a new radio (New Radio, NR) system for exemplary purposes, and NR terminology is used in most of the following descriptions, but these technologies can also be applied to systems other than the NR system, such as the 6^{th} generation (6^{th} Generation, 6G) communication system.

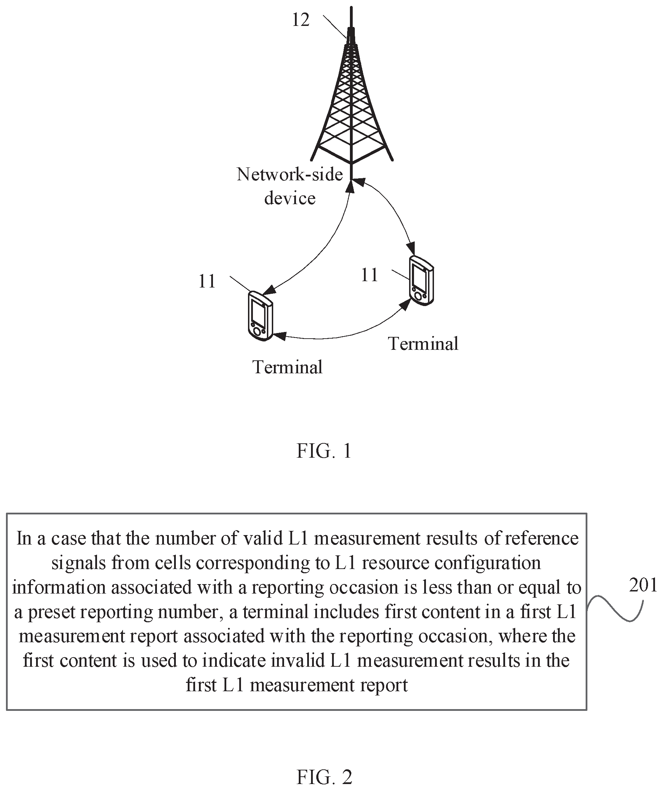

FIG. 1 is a block diagram of a wireless communication system to which embodiments of this application can be applied. The wireless communication system includes a terminal 11 and a network-side device 12. The terminal 11 may be a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), augmented reality (Augmented Reality, AR), a virtual reality (Virtual Reality, VR) device, a robot, a wearable device (Wearable Device), a flight vehicle (flight vehicle), vehicle user equipment (Vehicle User Equipment, VUE), a shipborne device, pedestrian user equipment (Pedestrian User Equipment, PUE), smart home (home devices with wireless communication functions, such as refrigerators, televisions, washing machines, or furniture), a game console, a personal computer (Personal Computer, PC), an automated teller machine, a self-service machine, or other terminal side devices. The wearable device includes a smart watch, a smart band, smart headphones, smart glasses, smart jewelry (a smart bracelet, a smart bangle, a smart ring, a smart necklace, a smart ankle bracelet, a smart anklet, and the like), a smart wristband, smart clothing, and the like. The vehicle user equipment may also be referred to as a vehicle terminal, vehicle controller, vehicle module, vehicle component, vehicle chip, or vehicle unit, or the like. It should be noted that the specific type of the terminal 11 is not limited in the embodiments of this application. The network-side device 12 may include an access network device or a core network device, where the access network device may also be referred to as a radio access network (Radio Access Network, RAN) device, radio access network function, or radio access network unit. The access network device may include a base station, a wireless local area network (Wireless Local Area Network, WLAN) access point (Access Point, AP), a wireless fidelity (Wireless Fidelity, WiFi) node, or the like. The base station may be referred to as a node B (Node B, NB), an evolved node B (Evolved Node B, eNB), a next generation node B (the next generation Node B, gNB), a new radio node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home node B (home Node B, HNB), a home evolved node B (home evolved Node B), a transmission reception point (Transmission Reception Point, TRP), or other appropriate terms in the art, as long as the same technical effect is achieved. The base station is not limited to specific technical terminology. It should be noted that in the embodiments of this application, only the base station in the NR system is taken as an example for introduction, but the base station is not limited to a specific type.

To enable those skilled in the art to better understand the embodiments of this application, the following description is provided first.
(1) Layer 1/layer 2 triggered handover (L1/L2-Triggered Mobility, LTM), and L1 measurement configuration and report configuration.

In the related art, layer 1/layer 2 triggered handover (L1/L2-Triggered Mobility, LTM) is introduced. Specifically, a serving base station determines a target cell based on a layer 1 (Layer 1, L1) measurement result of user equipment (User Equipment, UE), and triggers, by using a medium access control (Medium Access Control, MAC) control element (Control Element, CE), the UE to hand over a primary cell or a primary secondary cell (or a primary cell group or a secondary cell group) to the target cell (or a target cell group). During the LTM procedure, the network side sends a radio resource control (Radio Resource Control, RRC) message in advance, which includes multiple pieces of candidate configuration information and also includes multiple pieces of LTM channel state information (Channel State Information, CSI) resource configuration information. Each piece of LTM CSI resource configuration information includes one or more reference signal (Reference Signals, RS) resources of one or more LTM candidate cells, that is, includes one or more candidate configuration IDs and corresponding synchronization signal/physical broadcast channel block (Synchronization Signal and PBCH block, SSB) indexes (index). A candidate configuration associated with the candidate configuration ID has detailed RS configuration information of the candidate cell, including an RS frequency point, a subcarrier spacing, a periodicity, a time domain location, and power-related information. The UE can find the specific RS configuration information in the candidate configuration through the candidate configuration ID and the SSB index, so as to measure the RS and obtain a layer 1 measurement result of the RS of the candidate cell.

In addition, a serving cell configuration of the UE also includes one or more LTM-related CSI report configurations, and each CSI report configuration includes the following information:
an LTM CSI report configuration identifier;
an LTM CSI resource configuration identifier;
an LTM report configuration type, which includes periodic reporting/semi-persistent reporting based on a physical uplink control channel (Physical Uplink Control Channel, PUCCH) and a corresponding reporting resource; and
LTM reporting content, including the number of candidate cells for LTM CSI reporting, and the number of RSs reported for each cell.

Each LTM CSI report configuration is associated with one piece of LTM CSI resource configuration information, and the UE uses a reporting type and a reporting resource in this LTM CSI report configuration to report L1 measurement results of N RSs of M candidate cells in the LTM CSI resource configuration information.

According to the current RAN4 standardization process, the UE is not allowed to perform L1 measurement on an unknown cell (unknown cell). A known cell (known cell) means that for a neighboring cell or candidate cell, the following conditions are satisfied:
the UE has performed L3 measurement on this cell (how long ago L3 measurement has been performed should be regarded as a satisfying condition is currently being discussed for RAN4); and
an SSB for L1 measurement of the target cell is detectable.

Candidate cells or neighboring cells that do not satisfy the above conditions are unknown cells.

(2) L3 measurement configuration and report configuration.

The network configures UE in an RRC connected state (RRC_CONNECTED) to perform L3 measurement, and the network configures the UE to perform reporting according to a measurement configuration or to evaluate, based on a measurement result, whether a handover condition is satisfied. Measurement configuration information includes the following parameters:

Item 1: measurement target or measurement object (Measurement Object, MO). One MO indicates a time-frequency location of an RS to be measured, the network side (Network, NW) configures multiple cells associated with the MO and their cell-specific offsets, and each MO is associated with one measurement object identifier (measObjectId).

Item 2: report configuration. Each report configuration includes:
a reporting criterion, where the reporting criterion is used to trigger the UE to send a measurement report, which may be periodic reporting or event-triggered reporting;
a RS type, where the RS type is used to indicate which RS the UE uses to derive an L3 measurement result; and
a reporting format, that is, a parameter included in a measurement report by the UE, such as reference signal received power (Reference Signal Received Power, RSRP).

In addition, the report configuration may also include other related information, such as the maximum number of cells reported by the UE and the maximum number of beams reported for each cell.

Item 3: measurement identifier. Each measurement identifier is associated with one measurement target and one report configuration. By configuring multiple measurement identifiers, multiple MOs can be associated with one report configuration, or multiple report configurations can be associated with one MO.

Item 4: parameter configuration, which defines a filtering configuration parameter used for all event evaluations and related reporting as well as periodic measurement reporting.

Item 5: measurement gap, that is, a period for the UE to perform measurement.

For the MO associated with periodic and event-triggered reporting at L3, when the UE performs L3 measurement on the MO, the UE decides whether to perform measurement based on SSB or CSI-RS according to a reference signal type (RS-type) in a report configuration associated with this MO, and decides to perform measurement of reference signal received power (Reference Signal Received Power, RSRP), reference signal received quality (Reference Signal Received Quality, RSRQ), signal-to-interference-plus-noise ratio (Signal-to-Interference-Plus-Noise Ratio, SINR), or the like according to the reporting format in the report configuration. If the measurement configuration includes a serving cell measurement configuration (S-Measure Config), when the quality of a serving cell is lower than a threshold associated with the S-Measure Config, the UE can calculate L3 measurement based on an MO associated with a non-serving cell.

(3) Reporting requirements and invalid measurement values.

The reporting range of synchronization signal-reference signal received power ((Synchronization Signal, SS)-RSRP) for L3 reporting is defined as -156 dBm to -31 dBm, with a resolution of 1 dB. The reporting range of SS-RSRP and CSI-RSRP for L1 reporting is defined as -140 to -44 dBm, with a resolution of 1 dB.

Measurement reporting requirements:
the UE should send an L1-RSRP report only for a report configuration configured for an active bandwidth part (Bandwidth Part, BWP).

If the number of reported reference signals (nrofReportedRS) is configured to 1, the UE should report the L1-RSRP value as a 7-bit value within the range of [-140, -44] dBm, with a step size of 1 dB. If nrofReportedRS is configured to be greater than 1, or if group-based beam reporting (groupBasedBeamReporting) is enabled, the UE should use differential L1-RSRP-based reporting. Differential L1-RSRP is quantized to a 4-bit value with a step size of 2 dB, and the valid range of differential L1-RSRP is [-30, 0]. In LTE and 5G dual connectivity (E-UTRAN New Radio Dual Connectivity, EN-DC) operation, when the UE is configured to perform evolved universal terrestrial radio access (Evolved Universal Terrestrial Radio Access, E-UTRA) sounding reference signal (Sounding Reference Signal, SRS) carrier-based switching, additional delay can be expected, or if the UE can handle frequency range (Frequency Range, FR) gaps, additional delay can be expected.

The following describes in detail the method for processing L1 measurement results provided in the embodiments of this application through some embodiments and application scenarios thereof in conjunction with the accompanying drawings.

As shown in FIG. 2, an embodiment of this application provides a method for processing L1 measurement results, including:
Step 201: In a case that the number of valid L1 measurement results of reference signals from cells corresponding to L1 resource configuration information associated with a reporting occasion is less than or equal to a preset reporting number, a terminal includes first content in a first L1 measurement report associated with the reporting occasion, where the first content is used to indicate invalid L1 measurement results in the first L1 measurement report.

Optionally, the reporting occasion is a reporting occasion associated with the first L1 measurement report.

Optionally, the L1 resource configuration information is LTM CSI resource configuration information.

Optionally, the invalid L1 measurement result can be understood as that one or more reference signals from one or more cells or a cell included in the L1 resource configuration information do not have L1 measurement results.

Optionally, including an LTM CSI resource configuration identifier in a CSI report configuration can be understood as that the L1 resource configuration information is associated with the reporting occasion.

Optionally, in a case that the number of valid L1 measurement results of reference signals from cells corresponding to the L1 resource configuration information associated with the reporting occasion is less than or equal to the preset reporting number, if an L1 reporting type configured for the UE is periodic reporting or semi-persistent reporting on PUCCH or semi-persistent reporting on PUSCH or aperiodic reporting on PUSCH, the terminal includes the first content in the first L1 measurement report associated with the reporting occasion.

It should be noted that the terminal determines the reporting number (that is, the preset reporting number) based on parameters configured by the network side, and the preset reporting number is determined by the network side. For example, the network side requires the terminal to report measurement results of P reference signals from L cells, where L and P are both configured by the network side, and L and P are both positive integers.

In this embodiment of this application, in a case that the number of valid L1 measurement results of reference signals from cells corresponding to the L1 resource configuration information associated with the reporting occasion is less than or equal to the preset reporting number, the terminal includes the first content in the first L1 measurement report associated with the reporting occasion, where the first content is used to indicate the invalid L1 measurement results in the first L1 measurement report. With the first content, a network side can learn the invalid L1 measurement results in the first L1 measurement report, and thus can determine L1 measurement results in the first L1 measurement report other than the invalid L1 measurement results as valid L1 measurement results, ensuring consistency in L1 measurement result understanding between the network side and the terminal.

Optionally, in this embodiment of this application, before performing step 201, the method further includes:
receiving a first RRC message sent by a network-side device, where the first RRC message includes one or more pieces of L1 resource configuration information (such as LTM-CSI-Resource Configuration) and L1 report configuration information (LTM-CSI-Report Config).

Each piece of L1 resource configuration information includes:
(1) An L1 resource configuration identifier.
(2) One or more L1 RS indexes or one or more pieces of L1 RS configuration information, where the L1 RS configuration information includes one or more of the following:
   frequency domain information of an RS, such as a frequency point of the RS and other frequency domain information;
   time domain information of an RS, such as periodicity of the RS;
   a subcarrier spacing of an RS; and
   power-related information of an RS.
   The UE can associate the L1 RS index with the L1 RS configuration information.
(3) Cell identifiers corresponding to one or more L1 RSs.

Each piece of L1 report configuration information includes:
an L1 report configuration identifier;
an L1 resource configuration identifier;
an L1 report configuration type, which includes periodic reporting/semi-persistent reporting based on PUCCH and corresponding reporting resources; and
L1 reporting content, including the number of candidate cells for L1 reporting and the number of RSs reported for each cell.

Optionally, the first content includes any one of the following:
A1: an invalid measurement value, where the invalid measurement value is used to indicate that an L1 measurement result of the cell or a reference signal from the cell is an invalid L1 measurement result; and
A2: a repeated measurement result; where
the first L1 measurement report is required to include L1 measurement results of N cells, the first L1 measurement report includes valid L1 measurement results of M cells and repeated measurement results of valid L1 measurement results of P cells among the M cells, and the repeated measurement results of the P cells are used to indicate that L1 measurement results of N-M cells or reference signals from the N-M cells are invalid L1 measurement results, where N is greater than M, M is greater than or equal to P, and M, N, and P are each positive integers; or
the first L1 measurement report is required to include L1 measurement results of T reference signals from S cells, the first L1 measurement report includes valid L1 measurement results of T reference signals from S1 first cells, and includes valid L1 measurement results of Q reference signals from S2 second cells and repeated measurement results of valid L1 measurement results of K reference signals among the Q reference signals from each of the second cells, and the repeated measurement results of the valid L1 measurement results of the K reference signals from each of the second cells are used to indicate that L1 measurement results of T-Q reference signals from the second cell are invalid L1 measurement results, where S, S1, S2, T, Q, and K are each positive integers, T is greater than Q and S is greater than S1, S is greater than S2, and K is less than or equal to Q.

For the repeated measurement result, the cell and reference signal identifier associated with the repeated measurement result included in the first L1 measurement report should be the same as the cell and reference signal identifier of the repeated valid measurement result.

For example, it is assumed that the first L1 measurement report is required to include L1 measurement results of five cells, and the first L1 measurement report includes L1 measurement results of two identical cells 1, L1 measurement results of two identical cells 2, and one L1 measurement result of cell 3. The first L1 measurement report actually includes valid L1 measurement results of three cells: cell 1, cell 2, and cell 3, where the repeated L1 measurement result of one cell 1 and the repeated L1 measurement result of one cell 2 are invalid L1 measurement results. That is, the L1 measurement report includes valid L1 measurement results of three cells and invalid L1 measurement results of two cells.

For another example, it is assumed that the first L1 measurement report is required to include L1 measurement results of four reference signals from three cells, and the first L1 measurement report includes L1 measurement results of four reference signals from cell 1 and L1 measurement results of four reference signals from cell 2, also includes L1 measurement results of two RS1, an L1 measurement result of one RS2, and an L1 measurement result of one RS3 of cell 3, and also includes L1 measurement results of two RS1 and L1 measurement results of two RS2 of cell 4. The first L1 measurement report includes valid L1 measurement results of RS1, RS2, and RS3 of cell 3, and the repeated L1 measurement result of one RS1 of cell 3 is an invalid L1 measurement result. In addition, the first L1 measurement report includes valid L1 measurement results of RS1 and RS2 of cell 4. A measurement result of one repeated RS1 and a measurement result of one repeated RS2 in the L1 measurement report are invalid L1 measurement results. That is, in the first L1 measurement report, one reference signal from cell 3 has no valid L1 measurement result and two reference signals from cell 4 have no valid L1 measurement results.

In this embodiment of this application, when the UE performs L3 measurement, due to reasons such as a relatively low signal-to-interference-plus-noise ratio (Signal-to-Interference-Plus-Noise Ratio, SINR), the UE fails to successfully complete L3 measurement on the cell/frequency point. If the frequency point also corresponds to L1 resource configuration information, since the cell is unknown, the UE cannot perform the associated L1 measurement. For the L1 report configuration information, when a reporting occasion occurs, the UE must report the L1 measurement result. However, in the above scenario, part or all of the neighboring cells associated with the L1 report configuration may not have performed L1 measurement, so there are not enough valid results to report. In this scenario, the above invalid measurement value or repeated measurement result can be used to indicate that the corresponding cell or reference signal from the cell has no valid measurement result.

For item A1, the first L1 measurement report includes a cell identifier or an identifier of the reference signal from the cell corresponding to the invalid measurement value. Since the first L1 measurement report needs to include a cell identifier and an identifier of the reference signal, the method for determining the cell identifier and the identifier of the reference signal corresponding to the invalid measurement value included in the first L1 measurement report is: if the first L1 measurement report needs to include invalid first L1 measurement results of all reference signals from one cell, and none of the multiple cells associated with the first L1 measurement report has valid L1 measurement results, when the UE performs invalid value padding in the first L1 measurement report, the UE can arbitrarily select an identifier of one or more cells from these multiple cells without valid L1 measurement results or select an identifier of one or more cells by magnitudes of cell identifiers to include it in the first L1 measurement report, or the UE includes a protocol-agreed invalid cell identifier in the first L1 measurement report. For the identifier of the reference signal associated with the invalid measurement value, the UE can arbitrarily select one or more from the reference signals from the selected cell, or the UE selects one or more by magnitudes of reference signal identifiers, or the UE includes a protocol-agreed invalid reference signal identifier in the first L1 measurement report. If the first L1 measurement report needs to include invalid first L1 measurement results of part of reference signals from one cell, that is, the number of valid reference signals from the cell is less than the reported number of reference signals per cell required by the network, the first L1 measurement report includes the cell identifier. For the identifier of the reference signal associated with the invalid measurement value, the UE can arbitrarily select one or more from the reference signals from the cell, or the UE selects one or more by magnitudes of reference signal identifiers, or the UE includes a protocol-agreed invalid reference signal identifier in the first L1 measurement report. The invalid measurement value may be a value outside the allowed reporting value range or a value within the allowed reporting value range. Optionally, a value within the allowed reporting value range is reserved as the invalid measurement value. For example, the invalid measurement value may be a lower limit value or minimum value (that is, a smallest reporting value) within the reporting value range, or the upper limit value or maximum value within the reporting value range. Specifically, if the current lower limit value of SS-RSRP or CSI-RSRP for L3 is -156, when the UE reports -156, it indicates that the corresponding cell or reference signal from the cell has no valid L1 measurement result. If the current lower limit value of SS-RSRP or CSI-RSRP for L1 is -141, and the upper limit value thereof is -45, the invalid measurement value may be -141 or -45, or a value less than -141, or a value greater than -45. Optionally, the first L1 measurement report is a measurement report based on differential L1-RSRP, and the invalid measurement value may alternatively be less than the value of differential reference signal received power (DIFFRSRP)_15, that is, ΔRSRP less than -30, or greater than DIFFRSRP_0, that is, ΔRSRP greater than 0.

The invalid measurement value can indicate that the L1 measurement result of the corresponding cell or reference signal from the cell is invalid, thereby enabling the network-side device to learn the validity of the L1 measurement results of each cell in the L1 measurement report.

For item A2, if measurement results of N-M cells are repeated with an L1 measurement result of at least one cell among the M cells, the network-side device can learn that besides the M cells having valid measurement results, the L1 measurement results of the other N-M cells are invalid or the UE has not obtained valid L1 measurement results of the other N-M cells. Alternatively, in a case that the measurement results of T-Q reference signals from S2 cells are repeated with the L1 measurement result of at least one reference signal among the Q reference signals, the network side can learn that the S2 cells have only Q valid measurement results, and the measurement results of the other T-Q reference signals are invalid or the UE has not obtained valid L1 measurement results of the other T-Q reference signals.

It should be noted that if S2 is greater than 1, the Q values corresponding to different cells among the S2 cells are the same or different.

The above repeated measurement result implicitly indicates that the corresponding cell or the reference signal from the cell has no valid L1 measurement result, thereby enabling the network-side device to learn the validity of the L1 measurement results of each cell in the L1 measurement report.

Optionally, the method in this embodiment of this application further includes:
in a case that a reporting type corresponding to the first L1 measurement report is periodic reporting, semi-persistent reporting on PUCCH, semi-persistent reporting on PUSCH, or aperiodic reporting on PUSCH, sending the first L1 measurement report.

Optionally, the method in this embodiment of this application further includes at least one of the following:
not expecting, by the terminal, a network-side device to send, based on an invalid L1 measurement result, a transmission configuration indicator (Transmission Configuration Indicator TCI) state (state) activation command for a related reference signal to the terminal; which can also be understood as: skipping sending, by the network side, the transmission configuration indicator state TCI state activation command for a related reference signal to the terminal based on an invalid L1 measurement result;
not expecting, by the terminal, a network-side device to include, in a handover command based on an invalid L1 measurement result, a TCI state of a related reference signal; which can also be understood as: skipping including, by the network side, the TCI state of a related reference signal in the handover command based on the invalid L1 measurement result; and
not expecting, by the terminal, a network-side device to include, based on an invalid L1 measurement result and in a physical downlink control channel PDCCH command for triggering UE to obtain timing advance in advance, a reference signal index associated with the first L1 measurement report, which can also be understood as: skipping including, by the network side, based on the invalid L1 measurement result and in the physical downlink control channel (PDCCH) command for triggering UE to obtain timing advance in advance, the reference signal index associated with the first L1 measurement report.

In this embodiment of this application, according to protocol agreement or network-side implementation, only in a case that an L1 measurement result of an RS reported by the UE is valid, a TCI state or cell associated with the RS is known. In a case that the L1 measurement result of the RS reported by the UE is the first content, the above operations agree on the processing behavior of the network side for the corresponding RS or the TCI state associated with the corresponding RS.

Optionally, the method in this embodiment of this application further includes at least one of the following:
case 1: sending first indication information in a case that all valid L1 measurement results corresponding to L1 resource configuration information associated with a reporting occasion have not been obtained; where
the first indication information is used to indicate at least one of the following:
   no valid L1 measurement result on a first reporting occasion, where the first reporting occasion includes at least one reporting occasion located after a first time and associated with a report configuration identifier in the first indication information, and the first time is a time at which a network-side device receives the first indication information, and
   no valid L1 measurement result on a second reporting occasion, where the second reporting occasion includes at least one reporting occasion located after the first time.

Optionally, the first indication information includes at least one of the following:
a deactivation indication or an ignore indication; and
the report configuration identifier (report id).

For example, in a case that the first indication information includes a report configuration identifier, with the report configuration identifier, it is indicated that after the network-side device receives the first indication information, there is no valid L1 measurement result on at least one reporting occasion (such as L reporting occasions) associated with the report configuration identifier, and that there may be valid L1 measurement results on reporting occasions after the L reporting occasions. Alternatively, in a case that the first indication information includes a deactivation indication or an ignore indication, it is indicated that there is no valid L1 measurement result on a reporting occasion after the network-side device receives the first indication information, or it is indicated that there is no valid L1 measurement result on at least one reporting occasion (such as L reporting occasions) after the network-side device receives the first indication information, and that there may be valid L1 measurement results on reporting occasions after the L reporting occasions.

Option 2: sending second indication information in a case that an obtained L1 measurement result is a valid L1 measurement result associated with a reporting occasion, and the reporting occasion is a reporting occasion ignored by a network-side device; where
the second indication information is used to indicate at least one of the following:
monitoring a third reporting occasion, where the third reporting occasion includes at least one reporting occasion located after a second time and associated with a report configuration identifier in the second indication information, and the second time is a time at which a network-side device receives the second indication information, and
monitoring a fourth reporting occasion, where the fourth reporting occasion includes at least one reporting occasion located after the second time.

Optionally, the second indication information includes at least one of the following:
an activation indication or a stop-ignoring indication, and
the report configuration identifier.

Here, in a case that an obtained L1 measurement result is a valid L1 measurement result associated with the reporting occasion, and the reporting occasion is a reporting occasion ignored by the network-side device, with the second indication information, the network-side device can re-monitor the reporting occasion, thereby obtaining valid L1 measurement result on the reporting occasion.

Optionally, the method in this embodiment of this application further includes:
sending a second L1 measurement report; where
the second L1 measurement report includes at least one of the following:
   item 1: indication information indicating whether a cell associated with an L1 report configuration has a valid L1 measurement result;
   item 2: an L1 measurement result of a reference signal from a cell having a valid L1 measurement result, where the L1 measurement result may be RSRP; and
   item 3: the number of valid L1 measurement results of reference signals from a cell associated with an L1 report configuration or indication information indicating whether a reference signal associated with the cell has a valid L1 measurement result.

For item 1, for example, one reporting occasion is associated with neighboring cell #1, neighboring cell #2, neighboring cell #3, neighboring cell #4, neighboring cell #5, neighboring cell #6, neighboring cell #7, and neighboring cell #8. The UE has L1 measurement results of neighboring cells #1, 3, and 6, the UE reports "10100100", where "1" indicates that a neighboring cell corresponding to this location has a valid L1 measurement result, and "0" indicates that a neighboring cell corresponding to this location has no valid L1 measurement result.

For item 2: the number of RS measurement results of each cell reported by the UE is configured by the NW or agreed by a protocol or reported by the UE, used to indicate the number of available RS measurement results for each cell, or the minimum number of valid RS measurement results of each cell to be reported by the UE. For each cell, the UE reports measurement results of RSs in that number.

For item 3, one implementation is: the numbers of valid L1 measurement results of RSs of all cells reported by the UE are the same. For example, neighboring cell #1 has 4 RS measurement results, neighboring cell #3 has 5 RS measurement results, neighboring cell #4 has 6 RS measurement results, and the UE reports 4. Another implementation is that the UE reports the number of valid measurement results of RSs of each cell. For example, neighboring cell #1 has 4 RS measurement results, neighboring cell #3 has 5 RS measurement results, neighboring cell #4 has 6 RS measurement results, and the UE reports "4,5,6". Alternatively, assuming that each cell includes 5 RSs: assuming that RSs #1, 2, and 5 of cell #1 have valid L1 measurement results, and 3 and 4 have no valid L1 measurement results. For cell #1, the UE reports "11001". "1" indicates that an RS corresponding to that location has a valid L1 measurement result, and "0" indicates that an RS corresponding to that location has no valid L1 measurement result.

Optionally, the terminal sends the second L1 measurement report by using uplink control information (Uplink Control Information, UCI) or MAC CE on the L1 reporting occasion.

Optionally, before the sending a second L1 measurement report, the method further includes: receiving a second RRC message sent by a network-side device, where content included in the second RRC message differs from the content included in the first RRC message in that the L1 report configuration does not include L1 reporting content. That is, the length of the L1 reporting content is a variable length, and the L1 reporting content may include only valid L1 measurement results, thereby effectively saving reporting overheads.

Since the second L1 measurement report may include only valid L1 measurement results, reporting overheads can be effectively saved.

Optionally, the method in this embodiment of this application further includes:
in a case that an L3 measurement result of a serving cell is not lower than a threshold associated with a serving cell measurement configuration, and the neighboring cell is a candidate cell associated with L1 measurement, performing, by a terminal, L3 measurement on the neighboring cell.

Optionally, the cell is a pre-configured LTM candidate cell. For example, the neighboring cell is a cell other than the serving cell or a cell other than a special cell (Special Cell, SpCell).

According to the current protocol, if the measurement configuration includes the serving cell measurement configuration (S-MeasureConfig), when the quality of the serving cell is lower than a threshold associated with the S-MeasureConfig, the UE can perform L3 measurement based on an MO associated with a non-serving cell. However, when the quality of the serving cell is not lower than the threshold associated with the S-MeasureConfig, the terminal does not perform L3 measurement on the non-serving cell.

With the solution of this application, in a case that the L3 measurement result of the serving cell is not lower than the threshold associated with the serving cell measurement configuration, and the neighboring cell is a candidate cell associated with L1 measurement, the terminal continues to perform L3 measurement on the neighboring cell. This can ensure that the neighboring cell or candidate cell associated with L1 measurement is always in a known state, thereby ensuring that the L1 measurement related to the cell can be smoothly performed.

Optionally, as an implementation, the performing, by a terminal, L3 measurement on the neighboring cell includes at least one of the following:
performing L3 measurement on the neighboring cell based on a first measurement cycle, where the first measurement cycle is greater than a second measurement cycle, the second measurement cycle is an original measurement cycle corresponding to second L3 measurement configuration information, the first measurement cycle is a cycle configured by a network, agreed by a protocol, or determined based on UE implementation, and the second L3 measurement configuration information includes a measurement object and a report configuration associated with the measurement object; that is, performing L3 measurement on the neighboring cell at a lower frequency than before the threshold associated with the serving cell measurement configuration is met (exceeded);
performing measurement on an L3 measurement frequency point on which a neighboring cell is, so that the neighboring cell does not satisfy an unknown cell condition, that is, keeping the neighboring cell as a known cell for the UE; and
ignoring a threshold included in the serving cell measurement configuration, that is, performing, by the UE, normal L3 measurement on a frequency point associated with the neighboring cell or the neighboring cell regardless of whether a threshold associated with S-MeasureConfig is satisfied.

Optionally, the second L3 measurement configuration information in this embodiment of this application further includes measurement gap configuration information.

Optionally, after the performing, by a terminal, L3 measurement on the neighboring cell, the method further includes:
skipping reporting or skipping triggering reporting of an L3 measurement result corresponding to L3 measurement of the neighboring cell.

Here, the purpose of performing L3 measurement is to make the neighboring cell a known cell for the UE, thereby facilitating subsequent L1 measurement, rather than to perform mobility management based on the L3 measurement result. Therefore, the L3 measurement result corresponding to L3 measurement of the neighboring cell is not reported or is not triggered to report so as to reduce signaling overheads.

Optionally, the method in this embodiment of this application further includes:
performing L3 measurement on a cell or frequency point associated with L1 measurement configuration information according to a preconfigured cycle or a cycle agreed by a protocol or based on UE implementation; or
performing L3 measurement according to first L3 measurement configuration information, where the first L3 measurement configuration information is L3 measurement configuration information corresponding to L1 resource configuration information associated with L1 report configuration information included in a serving cell of the terminal.

If the NW side configures L1 measurement for a neighboring cell (such as Cell1), but does not configure an MO or report configuration (report configuration) related to L1 measurement in the traditional legacy L3 measurement configuration information (that is, the second L3 measurement configuration information described in this application), the UE does not perform L3 measurement on a cell (that is, Cell1) associated with the L1 measurement configuration, making this neighboring cell always an unknown cell. As a result, the UE cannot perform related L1 measurement. In this embodiment of this application, the first L3 measurement configuration information is additionally configured. The first L3 measurement configuration information corresponds to the L1 resource configuration information associated with the L1 report configuration information included in the serving cell, that is, a measurement object included in the first L3 measurement configuration information is a frequency point where the neighboring cell associated with L1 measurement is located, thereby enabling the UE to perform L3 measurement according to the first L3 measurement configuration information, that is, performing L3 measurement on the neighboring cell related to L1 measurement. This can ensure that all neighboring cells associated with the L1 measurement configuration are known cells.

In this embodiment of this application, before performing L3 measurement, the method further includes: receiving the first RRC message.

Optionally, as an implementation, in a case that the second L3 measurement configuration information does not include a frequency point in the L1 resource configuration information, the first L3 measurement configuration information configured by the network-side device is obtained.

Optionally, the terminal obtains the first L3 measurement configuration information through an RRC message, and the RRC message is the same as or different from the first RRC message.

In this embodiment of this application, if the terminal has not received the first L3 measurement configuration information, L3 measurement is performed on a cell or frequency point associated with the L1 measurement configuration information according to a preconfigured cycle or a cycle agreed by a protocol or based on UE implementation. If the first L3 measurement configuration information has been received, L3 measurement is performed according to the first L3 measurement configuration information.

It should be noted that if the second L3 measurement configuration information includes the frequency point of the L1 resource configuration information, the network side does not need to configure corresponding first L3 measurement configuration information for the frequency point.

As an implementation, the performing L3 measurement according to first L3 measurement configuration information includes:
in a case that a frequency point included in the first L3 measurement configuration information overlaps with a frequency point included in second L3 measurement configuration information, and the terminal has performed L3 measurement according to the second L3 measurement configuration information, performing L3 measurement according to a frequency point in the first L3 measurement configuration information that does not overlap with the frequency point of the second L3 measurement configuration information, where the second L3 measurement configuration information includes a measurement object and a report configuration associated with the measurement object.

That a frequency point included in the first L3 measurement configuration information overlaps with a frequency point included in second L3 measurement configuration information can means that the frequency point included in the first L3 measurement configuration information includes at least one frequency point in the second L3 measurement configuration information.

Optionally, the first L3 measurement configuration information includes at least one of the following:
a candidate cell identifier;
frequency domain information of a reference signal, where the frequency domain information includes frequency point information, and the frequency point information includes frequency point information in L1 resource configuration information in the first RRC message;
time domain information of a reference signal or an L3 measurement cycle, for example, a cycle of the reference signal or a measurement gap, used to indicate how often the terminal performs the L3 measurement; and
a measurement quantity, where the measurement quantity is used to indicate a measurement quantity of a reference signal measured by a terminal, for example, the measurement quantity is used to indicate a measurement quantity of RSRP.

Optionally, a candidate cell identifier included in the first L3 measurement configuration information is the same as a cell identifier in the L1 resource configuration information, or frequency point information included in the first L3 measurement configuration information is the same as frequency point information in the L1 resource configuration information.

In this embodiment of this application, in a case that the candidate cell identifier included in the first L3 measurement configuration information is the same as the cell identifier in L1 resource configuration information, or the frequency point information included in the first L3 measurement configuration information is the same as the frequency point information in the L1 resource configuration information, it is determined that the first L3 measurement configuration information is L3 measurement configuration information corresponding to the L1 resource configuration information associated with the L1 report configuration information included in the serving cell of the terminal.

Optionally, the method in this embodiment of this application further includes:
in a case that a measurement object or report configuration associated with a target frequency point is configured in second L3 measurement configuration information, performing L3 measurement according to a first measurement cycle or based on a first measurement cycle and a second measurement cycle, where the second measurement cycle is an original measurement cycle corresponding to the second L3 measurement configuration information, the first measurement cycle is greater than the second measurement cycle, the first measurement cycle is a cycle configured by a network, agreed by a protocol, or determined based on UE implementation, the second L3 measurement configuration information includes a measurement object and a report configuration associated with the measurement object, and the target frequency point is a frequency point corresponding to L1 measurement configuration information associated with a serving cell.

In this embodiment of this application, if the network side configures, in the legacy L3 measurement configuration information (that is, the second L3 measurement configuration information), a measurement object or report configuration associated with a target frequency point (that is, a frequency point corresponding to all L1 measurement configuration information associated with the current serving cell) in order to ensure that L1 measurement of all neighboring cells can be smoothly performed, the terminal can perform relaxed L3 measurement (that is, perform L3 measurement based on the first measurement cycle or based on the first measurement cycle and the second measurement cycle) on the cell, so that the cell satisfies the known cell requirement, thereby enabling the terminal to perform cell handover based on L1 measurement.

In this embodiment of this application, first, the terminal receives the first RRC message and an RRC message including the second L3 measurement configuration information, and then the terminal performs normal L3 (L3 measurement based on the second measurement cycle) or relaxed L3 measurement according to the first RRC message and the second L3 measurement configuration information. Optionally, the terminal performs relaxed L3 measurement according to a cycle configured by the network side or a predefined cycle or performs relaxed L3 measurement based on UE implementation.

Optionally, the performing L3 measurement according to a first measurement cycle or based on a first measurement cycle and a second measurement cycle includes at least one of the following:
B1: in a case that first control signaling has been received, performing L3 measurement according to the first measurement cycle or according to the first measurement cycle and the second measurement cycle, where the first control signaling is used to indicate the terminal to perform L3 measurement based on the first measurement cycle; where
after the first control signaling has been received, performing L3 measurement on a neighboring cell or a serving cell according to the first measurement cycle or according to the first measurement cycle and the second measurement cycle; and
B2: performing L3 measurement according to the first measurement cycle within a first part duration of a third measurement cycle, and performing L3 measurement according to the second measurement cycle within a second part duration of the third measurement cycle.

The time length of the third measurement cycle is greater than a target time length, and the target time length is a sum of a time length corresponding to the first measurement cycle and a time length corresponding to the second measurement cycle. Optionally, the first part duration and second part duration are protocol-predefined or network-side configured.

For example, if a measurement time period of the measurement object includes a first time period located within the first part duration and a second time period located within the second part duration, for the measurement object, the terminal performs L3 measurement according to the first measurement cycle within the first time period, and performs L3 measurement based on the second measurement cycle within the second time period.

Optionally, the performing L3 measurement according to a first measurement cycle includes at least one of the following:
performing L3 measurement on a serving cell according to the first measurement cycle; and
performing L3 measurement on a neighboring cell using a same radio access technology (intra-RAT) according to the first measurement cycle.

In this embodiment of this application, the serving cell can alternatively perform L3 measurement according to the second measurement cycle. For a neighboring cell using a different radio access technology (inter-RAT), L3 measurement is performed according to the first measurement cycle or the second measurement cycle.

Optionally, a start time of the third measurement cycle is a time at which the terminal receives L1 measurement configuration information or L1 report configuration information, or a time at which the terminal receives the first control signaling, or a time derived by the terminal according to a message including the third measurement cycle, where the first control signaling is used to indicate the terminal to perform L3 measurement based on the first measurement cycle.

Optionally, after the performing L3 measurement according to a first measurement cycle or based on a first measurement cycle and a second measurement cycle, the method further includes:
skipping reporting an L3 measurement result corresponding to the L3 measurement.

In this embodiment of this application, performing L3 measurement according to the first measurement cycle or based on the first measurement cycle and the second measurement cycle is to make the cell satisfy the known cell requirement for L1 measurement, rather than to perform mobility management based on the L3 measurement result. Therefore, here, the L3 measurement result may not be reported to save reporting signaling overheads.

In this embodiment of this application, in a case that the number of valid L1 measurement results of reference signals from cells corresponding to the L1 resource configuration information associated with the reporting occasion is less than or equal to the preset reporting number, the terminal includes the first content in the first L1 measurement report associated with the reporting occasion, where the first content is used to indicate the invalid L1 measurement results in the first L1 measurement report. With the first content, a network side can learn the invalid L1 measurement results in the first L1 measurement report, and thus can determine L1 measurement results in the first L1 measurement report other than the invalid L1 measurement results as valid L1 measurement results, ensuring consistency in L1 measurement result understanding between the network side and the terminal.

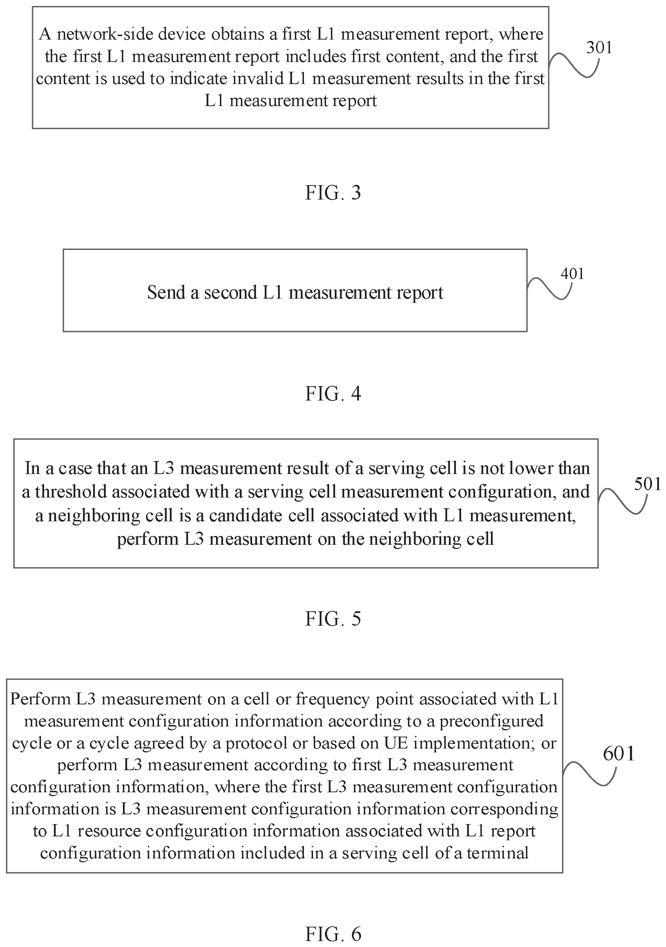

As shown in FIG. 3, an embodiment of this application further provides a method for processing L1 measurement results, including:
Step 301: A network-side device obtains a first L1 measurement report, where the first L1 measurement report includes first content, and the first content is used to indicate invalid L1 measurement results in the first L1 measurement report.

Optionally, the reporting occasion is a reporting occasion associated with the first L1 measurement report.

Optionally, the L1 resource configuration information is LTM CSI resource configuration information.

Optionally, the invalid L1 measurement result can be understood as that a cell or a reference signal from a cell corresponding to the L1 resource configuration information does not have an L1 measurement result.

Optionally, in a case that the number of valid L1 measurement results of reference signals from cells corresponding to the L1 resource configuration information associated with the reporting occasion is less than or equal to the preset reporting number, if an L1 reporting type configured for the UE is periodic reporting or semi-persistent reporting on PUCCH or semi-persistent reporting on PUSCH or aperiodic reporting on PUSCH, the terminal includes the first content in the first L1 measurement report associated with the reporting occasion.

Semi-persistent reporting may also be described as semi-persistent (semi-persistent) reporting.

It should be noted that the terminal determines the reporting number (that is, the preset reporting number) based on parameters configured by the network side, and the preset reporting number is determined by the network side. For example, the network side requires the terminal to report measurement results of P reference signals from L cells, where L and P are both configured by the network side, and L and P are both positive integers.

In this embodiment of this application, the network-side device obtains the first L1 measurement report, where the first L1 measurement report includes the first content, and the first content is used to indicate the invalid L1 measurement results in the first L1 measurement report. With the first content, the network side can learn the invalid L1 measurement results in the first L1 measurement report, and thus can determine L1 measurement results in the first L1 measurement report other than the invalid L1 measurement results as valid L1 measurement results, ensuring consistency in L1 measurement result understanding between the network side and the terminal.

Optionally, the first content includes any one of the following:
an invalid measurement value, where the invalid measurement value is used to indicate that an L1 measurement result of the cell or a reference signal from the cell is an invalid L1 measurement result; and
a repeated measurement result; where
the first L1 measurement report is required to include L1 measurement results of N cells, the first L1 measurement report includes valid L1 measurement results of M cells and repeated measurement results of valid L1 measurement results of P cells among the M cells, and the repeated measurement results of the P cells are used to indicate that L1 measurement results of N-M cells or reference signals from the N-M cells are invalid L1 measurement results, where N is greater than M, M is greater than or equal to P, and M, N, and P are each positive integers; or
the first L1 measurement report is required to include L1 measurement results of T reference signals from S cells, the first L1 measurement report includes valid L1 measurement results of T reference signals from S1 first cells, and includes valid L1 measurement results of Q reference signals from S2 second cells and repeated measurement results of valid L1 measurement results of K reference signals among the Q reference signals from each of the second cells, and the repeated measurement results of the valid L1 measurement results of the K reference signals from each of the second cells are used to indicate that L1 measurement results of T-Q reference signals from the second cell are invalid L1 measurement results, where S, S1, S2, T, Q, and K are each positive integers, T is greater than Q and S is greater than S1, S is greater than S2, and K is less than or equal to Q.

The first content has been described in detail in the method embodiment on the terminal side, and will not be repeated here.

Optionally, after the obtaining a first L1 measurement report, the method further includes at least one of the following:
skipping sending, to a terminal based on the invalid L1 measurement result, a TCI state activation command for a related reference signal;
skipping containing, in a handover command based on the invalid L1 measurement result, a TCI state of a related reference signal; and
skipping containing, in a PDCCH command for triggering UE to obtain timing advance in advance based on the invalid L1 measurement result, a reference signal index associated with the first L1 measurement report.

Optionally, the method in this embodiment of this application further includes:
obtaining first indication information or second indication information.

The first indication information is used to indicate at least one of the following:
no valid L1 measurement result on a first reporting occasion, where the first reporting occasion includes at least one reporting occasion located after a first time and associated with a report configuration identifier in the first indication information, and the first time is a time at which a network-side device receives the first indication information, and
no valid L1 measurement result on a second reporting occasion, where the second reporting occasion includes at least one reporting occasion located after the first time.

The second indication information is used to indicate at least one of the following:
monitoring a third reporting occasion, where the third reporting occasion includes at least one reporting occasion located after a second time and associated with a report configuration identifier in the second indication information, and the second time is a time at which a network-side device receives the second indication information, and
monitoring a fourth reporting occasion, where the fourth reporting occasion includes at least one reporting occasion located after the second time.

Optionally, the first indication information includes at least one of the following:
a deactivation indication or an ignore indication, and
the report configuration identifier; or
the second indication information includes at least one of the following:
   an activation indication or a stop-ignoring indication, and
   the report configuration identifier.

The first indication information and the second indication information have been described in detail in the method claims on the terminal side, and will not be repeated here.

Optionally, the method in this embodiment of this application further includes:
obtaining a second L1 measurement report; where
the second L1 measurement report includes at least one of the following:
   indication information indicating whether a cell associated with an L1 report configuration has a valid L1 measurement result;
   an L1 measurement result of a reference signal from a cell having a valid L1 measurement result; and
   the number of valid L1 measurement results of reference signals from a cell associated with an L1 report configuration or indication information indicating whether a reference signal associated with the cell has a valid L1 measurement result.

Optionally, the method in this embodiment of this application further includes:
sending first L3 measurement configuration information, where the first L3 measurement configuration information is L3 measurement configuration information corresponding to L1 resource configuration information associated with L1 report configuration information included in a serving cell of a terminal.

Optionally, in this embodiment of this application, in a case that second L3 measurement configuration information does not include a frequency point in the L1 resource configuration information, the first L3 measurement configuration information is sent.

Optionally, the method in this embodiment of this application further includes:
sending first control signaling, where the first control signaling is used to indicate a terminal to perform L3 measurement based on a first measurement cycle, the first measurement cycle is greater than a second measurement cycle, the second measurement cycle is an original measurement cycle corresponding to second L3 measurement configuration information, the first measurement cycle is a cycle configured by a network, agreed by a protocol, or determined based on UE implementation, and the second L3 measurement configuration information includes a measurement object and a report configuration associated with the measurement object.

The method executed by the network-side device is a method corresponding to the method executed by the terminal side, and the specific interaction process between the two has been described in detail in the embodiment on the terminal side, which will not be repeated here.

In this embodiment of this application, the network-side device obtains the first L1 measurement report, where the first L1 measurement report includes the first content, and the first content is used to indicate the invalid L1 measurement results in the first L1 measurement report. With the first content, the network side can learn the invalid L1 measurement results in the first L1 measurement report, and thus can determine L1 measurement results in the first L1 measurement report other than the invalid L1 measurement results as valid L1 measurement results, ensuring consistency in L1 measurement result understanding between the network side and the terminal.

An embodiment of this application further provides a method for processing L1 measurement results, executed by a terminal, and as shown in FIG. 4, including:
Step 401: Send a second L1 measurement report.

The second L1 measurement report includes at least one of the following:
item 1: indication information indicating whether a cell associated with an L1 report configuration has a valid L1 measurement result;
item 2: an L1 measurement result of a reference signal from a cell having a valid L1 measurement result, where the L1 measurement result may be RSRP; and
item 3: the number of valid L1 measurement results of reference signals from a cell associated with an L1 report configuration or indication information indicating whether a reference signal associated with the cell has a valid L1 measurement result.

For item 1, for example, one reporting occasion is associated with neighboring cell #1, neighboring cell #2, neighboring cell #3, neighboring cell #4, neighboring cell #5, neighboring cell #6, neighboring cell #7, and neighboring cell #8. The UE has L1 measurement results of neighboring cells #1, 3, and 6, the UE reports "10100100", where "1" indicates that a neighboring cell corresponding to this location has a valid L1 measurement result, and "0" indicates that a neighboring cell corresponding to this location has no valid L1 measurement result.

For item 2: the number of RS measurement results of each cell reported by the UE is configured by the NW or agreed by a protocol or reported by the UE, used to indicate the number of available RS measurement results for each cell, or the minimum number of valid RS measurement results of each cell to be reported by the UE. For each cell, the UE reports measurement results of RSs in that number.

For item 3, one implementation is: the numbers of valid L1 measurement results of RSs of all cells reported by the UE are the same. For example, neighboring cell #1 has 4 RS measurement results, neighboring cell #3 has 5 RS measurement results, neighboring cell #4 has 6 RS measurement results, and the UE reports 4. Another implementation is that the UE reports the number of valid measurement results of RSs of each cell. For example, neighboring cell #1 has 4 RS measurement results, neighboring cell #3 has 5 RS measurement results, neighboring cell #4 has 6 RS measurement results, and the UE reports "4,5,6". Alternatively, assuming that each cell includes 5 RSs: assuming that RSs #1, 2, and 5 of cell #1 have valid L1 measurement results, and 3 and 4 have no valid L1 measurement results. For cell #1, the UE reports "11001". "1" indicates that an RS corresponding to that location has a valid L1 measurement result, and "0" indicates that an RS corresponding to that location has no valid L1 measurement result.

Optionally, the terminal sends the second L1 measurement report by using uplink control information (Uplink Control Information, UCI) or MAC CE on the L1 reporting occasion.

Optionally, as an implementation, the sending a second L1 measurement report includes: sending the second L1 measurement report in a case that the number of valid L1 measurement results of reference signals from cells corresponding to the L1 resource configuration information associated with the reporting occasion is less than or equal to the preset reporting number.

Optionally, before the sending a second L1 measurement report, the method further includes: receiving a second RRC message sent by a network-side device, where content included in the second RRC message differs from the content included in the first RRC message in that the L1 report configuration does not include L1 reporting content. That is, the length of the L1 reporting content is a variable length, and the L1 reporting content may include only valid L1 measurement results, thereby effectively saving reporting overheads.

In this embodiment of this application, based on the second L1 measurement report, only valid L1 measurement results may be included in the L1 reporting content, thereby effectively saving reporting overheads.

An embodiment of this application further provides a method for processing L1 measurement results, executed by a terminal, and as shown in FIG. 5, including:
Step 501: In a case that an L3 measurement result of a serving cell is not lower than a threshold associated with a serving cell measurement configuration, and a neighboring cell is a candidate cell associated with L1 measurement, perform L3 measurement on the neighboring cell.

Optionally, the cell is a pre-configured LTM candidate cell. For example, the neighboring cell is a cell other than the serving cell or a cell other than a special cell (Special Cell, SpCell).

According to the current protocol, if the measurement configuration includes the serving cell measurement configuration (S-MeasureConfig), when the quality of the serving cell is lower than a threshold associated with the S-MeasureConfig, the UE can perform L3 measurement based on an MO associated with a non-serving cell. However, when the quality of the serving cell is not lower than the threshold associated with the S-MeasureConfig, the terminal does not perform L3 measurement on the non-serving cell.

With the solution of this application, in a case that the L3 measurement result of the serving cell is not lower than the threshold associated with the serving cell measurement configuration, and the neighboring cell is a candidate cell associated with L1 measurement, the terminal continues to perform L3 measurement on the neighboring cell. This can ensure that the neighboring cell or candidate cell associated with L1 measurement is always in a known state, thereby ensuring that the L1 measurement related to the cell can be smoothly performed.

Optionally, as an implementation, the performing, by a terminal, L3 measurement on the neighboring cell includes at least one of the following:
performing L3 measurement on the neighboring cell based on a first measurement cycle, where the first measurement cycle is greater than a second measurement cycle, the second measurement cycle is an original measurement cycle corresponding to second L3 measurement configuration information, the first measurement cycle is a cycle configured by a network, agreed by a protocol, or determined based on UE implementation, and the second L3 measurement configuration information includes a measurement object and a report configuration associated with the measurement object; that is, performing L3 measurement on the neighboring cell at a lower frequency than before the threshold associated with the serving cell measurement configuration is met (exceeded);
performing measurement on an L3 measurement frequency point on which a neighboring cell is, so that the neighboring cell does not satisfy an unknown cell condition, that is, keeping the neighboring cell as a known cell for the UE; and
ignoring a threshold included in the serving cell measurement configuration, that is, performing, by the UE, normal L3 measurement on a frequency point associated with the neighboring cell or the neighboring cell regardless of whether a threshold associated with S-MeasureConfig is satisfied.

Optionally, the second L3 measurement configuration information in this embodiment of this application further includes measurement gap configuration information.

Optionally, after the performing, by a terminal, L3 measurement on the neighboring cell, the method further includes:
skipping reporting or skipping triggering reporting of an L3 measurement result corresponding to L3 measurement of the neighboring cell.

Here, the purpose of performing L3 measurement is to make the neighboring cell a known cell for the UE, thereby facilitating subsequent L1 measurement, rather than to perform mobility management based on the L3 measurement result. Therefore, the L3 measurement result corresponding to L3 measurement of the neighboring cell is not reported or is not triggered to report so as to reduce signaling overheads.

An embodiment of this application further provides a method for processing L1 measurement results, executed by a terminal, and as shown in FIG. 6, including:
Step 601: Perform L3 measurement on a cell or frequency point associated with L1 measurement configuration information according to a preconfigured cycle or a cycle agreed by a protocol or based on UE implementation; or
perform L3 measurement according to first L3 measurement configuration information, where the first L3 measurement configuration information is L3 measurement configuration information corresponding to L1 resource configuration information associated with L1 report configuration information included in a serving cell of the terminal.

If the NW side configures L1 measurement for a neighboring cell (such as Cell1), but does not configure an MO or report configuration (report configuration) related to L1 measurement in the traditional legacy L3 measurement configuration information (that is, the second L3 measurement configuration information described in this application), the UE does not perform L3 measurement on a cell (that is, Cell1) associated with the L1 measurement configuration, making this neighboring cell always an unknown cell. As a result, the UE cannot perform related L1 measurement. In this embodiment of this application, the first L3 measurement configuration information is additionally configured. The first L3 measurement configuration information corresponds to the L1 resource configuration information associated with the L1 report configuration information included in the serving cell, that is, a measurement object included in the first L3 measurement configuration information is a frequency point where the neighboring cell associated with L1 measurement is located, thereby enabling the UE to perform L3 measurement according to the first L3 measurement configuration information, that is, performing L3 measurement on the neighboring cell related to L1 measurement. This can ensure that all neighboring cells associated with the L1 measurement configuration are known cells.

In this embodiment of this application, before performing L3 measurement, the method further includes: receiving the first RRC message.

Optionally, as an implementation, in a case that the second L3 measurement configuration information does not include a frequency point in the L1 resource configuration information, the first L3 measurement configuration information configured by the network-side device is obtained.

Optionally, the terminal obtains the first L3 measurement configuration information through an RRC message, and the RRC message is the same as or different from the first RRC message.

In this embodiment of this application, if the terminal has not received the first L3 measurement configuration information, L3 measurement is performed on a cell or frequency point associated with the L1 measurement configuration information according to a preconfigured cycle or a cycle agreed by a protocol or based on UE implementation. If the first L3 measurement configuration information has been received, L3 measurement is performed according to the first L3 measurement configuration information.

It should be noted that if the second L3 measurement configuration information includes the frequency point of the L1 resource configuration information, the network side does not need to configure corresponding first L3 measurement configuration information for the frequency point.

As an implementation, the performing L3 measurement according to first L3 measurement configuration information includes:
in a case that a frequency point included in the first L3 measurement configuration information overlaps with a frequency point included in second L3 measurement configuration information, and the terminal has performed L3 measurement according to the second L3 measurement configuration information, performing L3 measurement according to a frequency point in the first L3 measurement configuration information that does not overlap with the frequency point of the second L3 measurement configuration information, where the second L3 measurement configuration information includes a measurement object and a report configuration associated with the measurement object.

That a frequency point included in the first L3 measurement configuration information overlaps with a frequency point included in second L3 measurement configuration information can means that the frequency point included in the first L3 measurement configuration information includes at least one frequency point in the second L3 measurement configuration information.

Optionally, the first L3 measurement configuration information includes at least one of the following:
a candidate cell identifier;
frequency domain information of a reference signal, where the frequency domain information includes frequency point information, and the frequency point information includes frequency point information in L1 resource configuration information in the first RRC message;
time domain information of a reference signal or an L3 measurement cycle, for example, a cycle of the reference signal or a measurement gap, used to indicate how often the terminal performs the L3 measurement; and
a measurement quantity, where the measurement quantity is used to indicate a measurement quantity of a reference signal measured by a terminal, for example, the measurement quantity is used to indicate a measurement quantity of RSRP.

Optionally, a candidate cell identifier included in the first L3 measurement configuration information is the same as a cell identifier in the L1 resource configuration information, or frequency point information included in the first L3 measurement configuration information is the same as frequency point information in the L1 resource configuration information.

In this embodiment of this application, in a case that the candidate cell identifier included in the first L3 measurement configuration information is the same as the cell identifier in L1 resource configuration information, or the frequency point information included in the first L3 measurement configuration information is the same as the frequency point information in the L1 resource configuration information, it is determined that the first L3 measurement configuration information is L3 measurement configuration information corresponding to the L1 resource configuration information associated with the L1 report configuration information included in the serving cell of the terminal.

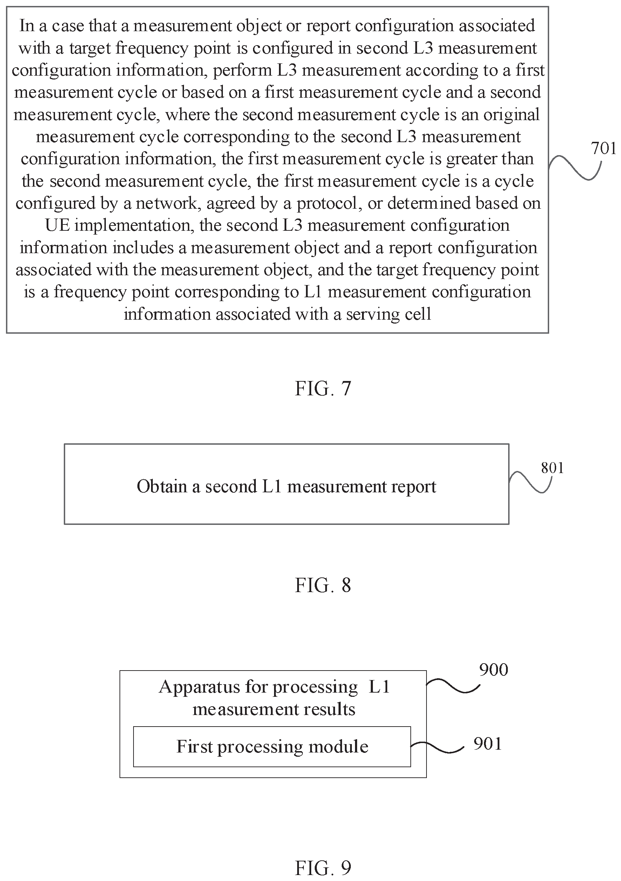

An embodiment of this application further provides a method for processing L1 measurement results, executed by a terminal, and as shown in FIG. 7, including:
Step 701: In a case that a measurement object or report configuration associated with a target frequency point is configured in second L3 measurement configuration information, perform L3 measurement according to a first measurement cycle or based on a first measurement cycle and a second measurement cycle, where the second measurement cycle is an original measurement cycle corresponding to the second L3 measurement configuration information, the first measurement cycle is greater than the second measurement cycle, the first measurement cycle is a cycle configured by a network, agreed by a protocol, or determined based on UE implementation, the second L3 measurement configuration information includes a measurement object and a report configuration associated with the measurement object, and the target frequency point is a frequency point corresponding to L1 measurement configuration information associated with a serving cell.

In this embodiment of this application, if the network side configures, in the legacy L3 measurement configuration information (that is, the second L3 measurement configuration information), a measurement object or report configuration associated with a target frequency point (that is, a frequency point corresponding to all L1 measurement configuration information associated with the current serving cell) in order to ensure that L1 measurement of all neighboring cells can be smoothly performed, the terminal can perform relaxed L3 measurement (that is, perform L3 measurement based on the first measurement cycle or based on the first measurement cycle and the second measurement cycle) on the cell, so that the cell satisfies the known cell requirement, thereby enabling the terminal to perform cell handover based on L1 measurement.

In this embodiment of this application, first, the terminal receives the first RRC message and an RRC message including the second L3 measurement configuration information, and then the terminal performs normal L3 (L3 measurement based on the second measurement cycle) or relaxed L3 measurement according to the first RRC message and the second L3 measurement configuration information. Optionally, the terminal performs relaxed L3 measurement according to a cycle configured by the network side or a predefined cycle or performs relaxed L3 measurement based on UE implementation.

Optionally, the performing L3 measurement according to a first measurement cycle or based on a first measurement cycle and a second measurement cycle includes at least one of the following:
B1: in a case that first control signaling has been received, performing L3 measurement according to the first measurement cycle or according to the first measurement cycle and the second measurement cycle, where the first control signaling is used to indicate the terminal to perform L3 measurement based on the first measurement cycle; where
after the first control signaling has been received, performing L3 measurement on a neighboring cell or a serving cell according to the first measurement cycle or according to the first measurement cycle and the second measurement cycle; and
B2: performing L3 measurement according to the first measurement cycle within a first part duration of a third measurement cycle, and performing L3 measurement according to the second measurement cycle within a second part duration of the third measurement cycle.

The time length of the third measurement cycle is greater than a target time length, and the target time length is a sum of a time length corresponding to the first measurement cycle and a time length corresponding to the second measurement cycle. Optionally, the first part duration and second part duration are protocol-predefined or network-side configured.

For example, if a measurement time period of the measurement object includes a first time period located within the first part duration and a second time period located within the second part duration, for the measurement object, the terminal performs L3 measurement according to the first measurement cycle within the first time period, and performs L3 measurement based on the second measurement cycle within the second time period.

Optionally, the performing L3 measurement according to a first measurement cycle includes at least one of the following:
performing L3 measurement on a serving cell according to the first measurement cycle; and
performing L3 measurement on a neighboring cell using a same radio access technology (intra-RAT) according to the first measurement cycle.

In this embodiment of this application, the serving cell can alternatively perform L3 measurement according to the second measurement cycle. For a neighboring cell using a different radio access technology (inter-RAT), L3 measurement is performed according to the first measurement cycle or the second measurement cycle.

Optionally, a start time of the third measurement cycle is a time at which the terminal receives L1 measurement configuration information or L1 report configuration information, or a time at which the terminal receives the first control signaling, or a time derived by the terminal according to a message including the third measurement cycle, where the first control signaling is used to indicate the terminal to perform L3 measurement based on the first measurement cycle.

Optionally, after the performing L3 measurement according to a first measurement cycle or based on a first measurement cycle and a second measurement cycle, further including:
skipping reporting an L3 measurement result corresponding to the L3 measurement.

In this embodiment of this application, performing L3 measurement according to the first measurement cycle or based on the first measurement cycle and the second measurement cycle is to make the cell satisfy the known cell requirement for L1 measurement, rather than to perform mobility management based on the L3 measurement result. Therefore, here, the L3 measurement result may not be reported to save reporting signaling overheads.

An embodiment of this application further provides a method for processing L1 measurement results, executed by a network-side device, and as shown in FIG. 8, including:
Step 801: Obtain a second L1 measurement report.

The second L1 measurement report includes at least one of the following:
indication information indicating whether a cell associated with an L1 report configuration has a valid L1 measurement result;
an L1 measurement result of a reference signal from a cell having a valid L1 measurement result; and
the number of valid L1 measurement results of reference signals from a cell associated with an L1 report configuration or indication information indicating whether a reference signal associated with the cell has a valid L1 measurement result.

Optionally, as an implementation, the second L1 measurement report is obtained in a case that the number of valid L1 measurement results of reference signals from cells corresponding to L1 resource configuration information associated with a reporting occasion is less than or equal to a preset reporting number.

The method executed by the network-side device is a method corresponding to the method executed by the terminal side, and the specific interaction process between the two has been described in detail in the embodiments of the terminal side, which will not be repeated here.

The method for processing L1 measurement results provided in the embodiments of this application may be executed by an apparatus for processing L1 measurement results. In the embodiments of this application, an apparatus for processing L1 measurement results executing the method for processing L1 measurement results is taken as an example to describe the apparatus for processing L1 measurement results provided in the embodiments of this application.

As shown in FIG. 9, an embodiment of this application provides an apparatus 900 for processing L1 measurement results, including:
a first processing module 901, configured to: in a case that the number of valid L1 measurement results of reference signals from cells corresponding to L1 resource configuration information associated with a reporting occasion is less than or equal to a preset reporting number, include first content in a first L1 measurement report associated with the reporting occasion, where the first content is used to indicate invalid L1 measurement results in the first L1 measurement report.

Optionally, the first content includes any one of the following:
an invalid measurement value, where the invalid measurement value is used to indicate that an L1 measurement result of the cell or a reference signal from the cell is an invalid L1 measurement result; and
a repeated measurement result; where
the first L1 measurement report is required to include L1 measurement results of N cells, the first L1 measurement report includes valid L1 measurement results of M cells and repeated measurement results of valid L1 measurement results of P cells among the M cells, and the repeated measurement results of the P cells are used to indicate that L1 measurement results of N-M cells or reference signals from the N-M cells are invalid L1 measurement results, where N is greater than M, M is greater than or equal to P, and M, N, and P are each positive integers; or
the first L1 measurement report is required to include L1 measurement results of T reference signals from S cells, the first L1 measurement report includes valid L1 measurement results of T reference signals from S1 first cells, and includes valid L1 measurement results of Q reference signals from S2 second cells and repeated measurement results of valid L1 measurement results of K reference signals among the Q reference signals from each of the second cells, and the repeated measurement results of the valid L1 measurement results of the K reference signals from each of the second cells are used to indicate that L1 measurement results of T-Q reference signals from the second cell are invalid L1 measurement results, where S, S1, S2, T, Q, and K are each positive integers, T is greater than Q and S is greater than S1, S is greater than S2, and K is less than or equal to Q.

Optionally, the apparatus in the embodiments of this application further includes:
a first sending module, configured to send the first L1 measurement report in a case that a reporting type corresponding to the first L1 measurement report is periodic reporting, semi-persistent reporting on PUCCH, semi-persistent reporting on PUSCH, or aperiodic reporting on PUSCH.

Optionally, the apparatus in the embodiments of this application further includes a second processing module, configured to perform at least one of the following:
not expecting a network-side device to send, based on an invalid L1 measurement result, a transmission configuration indicator state TCI state activation command for a related reference signal to the terminal;
not expecting a network-side device to include, in a handover command based on an invalid L1 measurement result, a TCI state of a related reference signal; and
not expecting a network-side device to include, based on an invalid L1 measurement result and in a physical downlink control channel PDCCH command for triggering UE to obtain timing advance in advance, a reference signal index associated with the first L1 measurement report.

Optionally, the apparatus in the embodiments of this application further includes: a second sending module, configured to perform at least one of the following:
sending first indication information in a case that all valid L1 measurement results corresponding to L1 resource configuration information associated with a reporting occasion have not been obtained; and
sending second indication information in a case that an obtained L1 measurement result is a valid L1 measurement result associated with a reporting occasion, and the reporting occasion is a reporting occasion ignored by a network-side device.

The first indication information is used to indicate at least one of the following:
no valid L1 measurement result on a first reporting occasion, where the first reporting occasion includes at least one reporting occasion located after a first time and associated with a report configuration identifier in the first indication information, and the first time is a time at which a network-side device receives the first indication information, and
no valid L1 measurement result on a second reporting occasion, where the second reporting occasion includes at least one reporting occasion located after the first time.

The second indication information is used to indicate at least one of the following:
monitoring a third reporting occasion, where the third reporting occasion includes at least one reporting occasion located after a second time and associated with a report configuration identifier in the second indication information, and the second time is a time at which a network-side device receives the second indication information, and
monitoring a fourth reporting occasion, where the fourth reporting occasion includes at least one reporting occasion located after the second time.

Optionally, the first indication information includes at least one of the following:
a deactivation indication or an ignore indication, and
the report configuration identifier; or
the second indication information includes at least one of the following:
   an activation indication or a stop-ignoring indication, and
   the report configuration identifier.

Optionally, the apparatus in the embodiments of this application further includes: a third sending module configured to send a second L1 measurement report; where
the second L1 measurement report includes at least one of the following:
indication information indicating whether a cell associated with an L1 report configuration has a valid L1 measurement result;
an L1 measurement result of a reference signal from a cell having a valid L1 measurement result; and
the number of valid L1 measurement results of reference signals from a cell associated with an L1 report configuration or indication information indicating whether a reference signal associated with the cell has a valid L1 measurement result.

Optionally, the apparatus in the embodiments of this application further includes:
a first measurement module, configured to: in a case that an L3 measurement result of a serving cell is not lower than a threshold associated with a serving cell measurement configuration, and the neighboring cell is a candidate cell associated with L1 measurement, perform L3 measurement on the neighboring cell.

Optionally, the first measurement module is configured to perform at least one of the following:
performing L3 measurement on the neighboring cell based on a first measurement cycle, where the first measurement cycle is greater than a second measurement cycle, the second measurement cycle is an original measurement cycle corresponding to second L3 measurement configuration information, the first measurement cycle is a cycle configured by a network, agreed by a protocol, or determined based on UE implementation, and the second L3 measurement configuration information includes a measurement object and a report configuration associated with the measurement object;
performing measurement on an L3 measurement frequency point on which a neighboring cell is; and
ignoring a threshold included in the serving cell measurement configuration.

Optionally, the apparatus in the embodiments of this application further includes:
a third processing module, configured to: after the first measurement module performs L3 measurement on the neighboring cell, skip reporting or skip triggering reporting of an L3 measurement result corresponding to L3 measurement of the neighboring cell.

Optionally, the apparatus in the embodiments of this application further includes:
a second measurement module, configured to perform L3 measurement on a cell or frequency point associated with L1 measurement configuration information according to a preconfigured cycle or a cycle agreed by a protocol or based on UE implementation; or
perform L3 measurement according to first L3 measurement configuration information, where the first L3 measurement configuration information is L3 measurement configuration information corresponding to L1 resource configuration information associated with L1 report configuration information included in a serving cell of the terminal.

Optionally, the second measurement module is configured to:
in a case that a frequency point included in the first L3 measurement configuration information overlaps with a frequency point included in second L3 measurement configuration information, and the terminal has performed L3 measurement according to the second L3 measurement configuration information, perform L3 measurement according to a frequency point in the first L3 measurement configuration information that does not overlap with the frequency point of the second L3 measurement configuration information, where the second L3 measurement configuration information includes a measurement object and a report configuration associated with the measurement object.

Optionally, the first L3 measurement configuration information includes at least one of the following:
a candidate cell identifier;
frequency domain information of a reference signal, where the frequency domain information includes frequency point information;
time domain information of a reference signal or an L3 measurement cycle; and
a measurement quantity, where the measurement quantity is used to indicate a measurement quantity of a reference signal measured by a terminal.

Optionally, a candidate cell identifier included in the first L3 measurement configuration information is the same as a cell identifier in the L1 resource configuration information, or frequency point information included in the first L3 measurement configuration information is the same as frequency point information in the L1 resource configuration information.

Optionally, the apparatus in the embodiments of this application further includes:
a third measurement module, configured to: in a case that a measurement object or report configuration associated with a target frequency point is configured in second L3 measurement configuration information, perform L3 measurement according to a first measurement cycle or based on a first measurement cycle and a second measurement cycle, where the second measurement cycle is an original measurement cycle corresponding to the second L3 measurement configuration information, the first measurement cycle is greater than the second measurement cycle, the first measurement cycle is a cycle configured by a network, agreed by a protocol, or determined based on UE implementation, the second L3 measurement configuration information includes a measurement object and a report configuration associated with the measurement object, and the target frequency point is a frequency point corresponding to L1 measurement configuration information associated with a serving cell.

Optionally, the third measurement module is configured to perform at least one of the following:
in a case that first control signaling has been received, performing L3 measurement according to the first measurement cycle or according to the first measurement cycle and the second measurement cycle, where the first control signaling is used to indicate the terminal to perform L3 measurement based on the first measurement cycle; and
performing L3 measurement according to the first measurement cycle within a first part duration of a third measurement cycle, and performing L3 measurement according to the second measurement cycle within a second part duration of the third measurement cycle.

Optionally, the third measurement module is configured to perform at least one of the following:
performing L3 measurement on a serving cell according to the first measurement cycle; and
performing L3 measurement on a neighboring cell using a same radio access technology intra-RAT according to the first measurement cycle.

Optionally, a start time of the third measurement cycle is a time at which the terminal receives L1 measurement configuration information or L1 report configuration information, or a time at which the terminal receives the first control signaling, or a time derived by the terminal according to a message including the third measurement cycle, where the first control signaling is used to indicate the terminal to perform L3 measurement based on the first measurement cycle.

Optionally, the apparatus in the embodiments of this application further includes:
a fourth processing module, configured to: after the third measurement module performs L3 measurement according to the first measurement cycle or based on the first measurement cycle and the second measurement cycle, skip reporting an L3 measurement result corresponding to the L3 measurement.

In this embodiment of this application, in a case that the number of valid L1 measurement results of reference signals from cells corresponding to the L1 resource configuration information associated with the reporting occasion is less than or equal to the preset reporting number, the terminal includes the first content in the first L1 measurement report associated with the reporting occasion, where the first content is used to indicate the invalid L1 measurement results in the first L1 measurement report. With the first content, the network side can learn the invalid L1 measurement results in the first L1 measurement report, ensuring consistency in L1 measurement result understanding between the network side and the terminal.

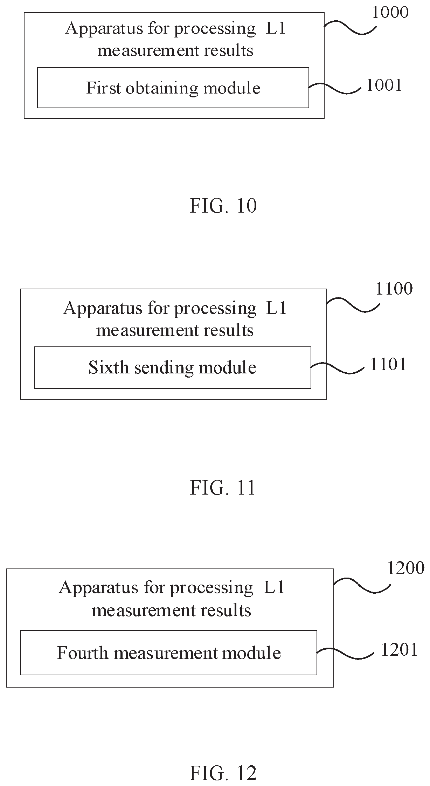

As shown in FIG. 10, an embodiment of this application provides an apparatus 1000 for processing L1 measurement results, including:
a first obtaining module 1001, configured to obtain a first L1 measurement report, where the first L1 measurement report includes first content, and the first content is used to indicate invalid L1 measurement results in the first L1 measurement report.

Optionally, the first content includes any one of the following:
an invalid measurement value, where the invalid measurement value is used to indicate that an L1 measurement result of the cell or a reference signal from the cell is an invalid L1 measurement result; and
a repeated measurement result; where
the first L1 measurement report is required to include L1 measurement results of N cells, the first L1 measurement report includes valid L1 measurement results of M cells and repeated measurement results of valid L1 measurement results of P cells among the M cells, and the repeated measurement results of the P cells are used to indicate that L1 measurement results of N-M cells or reference signals from the N-M cells are invalid L1 measurement results, where N is greater than M, M is greater than or equal to P, and M, N, and P are each positive integers; or
the first L1 measurement report is required to include L1 measurement results of T reference signals from S cells, the first L1 measurement report includes valid L1 measurement results of T reference signals from S1 first cells, and includes valid L1 measurement results of Q reference signals from S2 second cells and repeated measurement results of valid L1 measurement results of K reference signals among the Q reference signals from each of the second cells, and the repeated measurement results of the valid L1 measurement results of the K reference signals from each of the second cells are used to indicate that L1 measurement results of T-Q reference signals from the second cell are invalid L1 measurement results, where S, S1, S2, T, Q, and K are each positive integers, T is greater than Q and S is greater than S1, S is greater than S2, and K is less than or equal to Q.

Optionally, the apparatus in the embodiments of this application further includes:
a fifth processing module, configured to: after the first obtaining module obtains the first L1 measurement report, perform at least one of the following:
skipping sending, to a terminal based on the invalid L1 measurement result, a TCI state activation command for a related reference signal;
skipping containing, in a handover command based on the invalid L1 measurement result, a TCI state of a related reference signal; and
skipping containing, in a PDCCH command for triggering UE to obtain timing advance in advance based on the invalid L1 measurement result, a reference signal index associated with the first L1 measurement report.

Optionally, the apparatus in the embodiments of this application further includes:
a second obtaining module, configured to obtain first indication information or second indication information.

The first indication information is used to indicate at least one of the following:
no valid L1 measurement result on a first reporting occasion, where the first reporting occasion includes at least one reporting occasion located after a first time and associated with a report configuration identifier in the first indication information, and the first time is a time at which a network-side device receives the first indication information, and
no valid L1 measurement result on a second reporting occasion, where the second reporting occasion includes at least one reporting occasion located after the first time.

The second indication information is used to indicate at least one of the following:
monitoring a third reporting occasion, where the third reporting occasion includes at least one reporting occasion located after a second time and associated with a report configuration identifier in the second indication information, and the second time is a time at which a network-side device receives the second indication information, and
monitoring a fourth reporting occasion, where the fourth reporting occasion includes at least one reporting occasion located after the second time.

Optionally, the first indication information includes at least one of the following:
a deactivation indication or an ignore indication, and
the report configuration identifier; or
the second indication information includes at least one of the following:
   an activation indication or a stop-ignoring indication, and
   the report configuration identifier.

Optionally, the apparatus in the embodiments of this application further includes:
a third obtaining module, configured to obtain a second L1 measurement report; where
the second L1 measurement report includes at least one of the following:
   indication information indicating whether a cell associated with an L1 report configuration has a valid L1 measurement result;
   an L1 measurement result of a reference signal from a cell having a valid L1 measurement result; and
   the number of valid L1 measurement results of reference signals from a cell associated with an L1 report configuration or indication information indicating whether a reference signal associated with the cell has a valid L1 measurement result.

Optionally, the apparatus in the embodiments of this application further includes:
a fourth sending module, configured to send first L3 measurement configuration information, where the first L3 measurement configuration information is L3 measurement configuration information corresponding to L1 resource configuration information associated with L1 report configuration information included in a serving cell of a terminal.

Optionally, the apparatus in the embodiments of this application further includes:
a fifth sending module, configured to send first control signaling, where the first control signaling is used to indicate a terminal to perform L3 measurement based on a first measurement cycle, the first measurement cycle is greater than a second measurement cycle, the second measurement cycle is an original measurement cycle corresponding to second L3 measurement configuration information, the first measurement cycle is a cycle configured by a network, agreed by a protocol, or determined based on UE implementation, and the second L3 measurement configuration information includes a measurement object and a report configuration associated with the measurement object.

In this embodiment of this application, the network-side device obtains the first L1 measurement report, where the first L1 measurement report includes the first content, and the first content is used to indicate the invalid L1 measurement results in the first L1 measurement report. With the first content, the network side can learn the invalid L1 measurement results in the first L1 measurement report, ensuring consistency in L1 measurement result understanding between the network side and the terminal.

The apparatus for processing L1 measurement results in this embodiment of this application may be an electronic device, such as an electronic device with an operating system, or a component in an electronic device, such as an integrated circuit or a chip. The electronic device may be a terminal, or may be another device other than a terminal. For example, the terminal may include, but is not limited to, the types of the terminal 11 listed above, and the another device may be a server, a network attached storage (Network Attached Storage, NAS), or the like, which is not specifically limited in the embodiments of this application.

As shown in FIG. 11, an embodiment of this application provides an apparatus 1100 for processing L1 measurement results, including:
a sixth sending module 1101, configured to send a second L1 measurement report; where
the second L1 measurement report includes at least one of the following:
   indication information indicating whether a cell associated with an L1 report configuration has a valid L1 measurement result;
   an L1 measurement result of a reference signal from a cell having a valid L1 measurement result; and
   the number of valid L1 measurement results of reference signals from a cell associated with an L1 report configuration or indication information indicating whether a reference signal associated with the cell has a valid L1 measurement result.

As shown in FIG. 12, an embodiment of this application provides an apparatus 1200 for processing L1 measurement results, including:
a fourth measurement module 1201, configured to: in a case that an L3 measurement result of a serving cell is not lower than a threshold associated with a serving cell measurement configuration, and a neighboring cell is a candidate cell associated with L1 measurement, perform L3 measurement on the neighboring cell.

Optionally, the fourth measurement module is configured to perform at least one of the following:
performing L3 measurement on the neighboring cell based on a first measurement cycle, where the first measurement cycle is greater than a second measurement cycle, the second measurement cycle is an original measurement cycle corresponding to second L3 measurement configuration information, the first measurement cycle is a cycle configured by a network, agreed by a protocol, or determined based on UE implementation, and the second L3 measurement configuration information includes a measurement object and a report configuration associated with the measurement object;
performing measurement on an L3 measurement frequency point on which a neighboring cell is; and
ignoring a threshold included in the serving cell measurement configuration.

Optionally, the apparatus in the embodiments of this application further includes:
a sixth processing module, configured to skip reporting or skip triggering reporting of an L3 measurement result corresponding to L3 measurement of the neighboring cell.

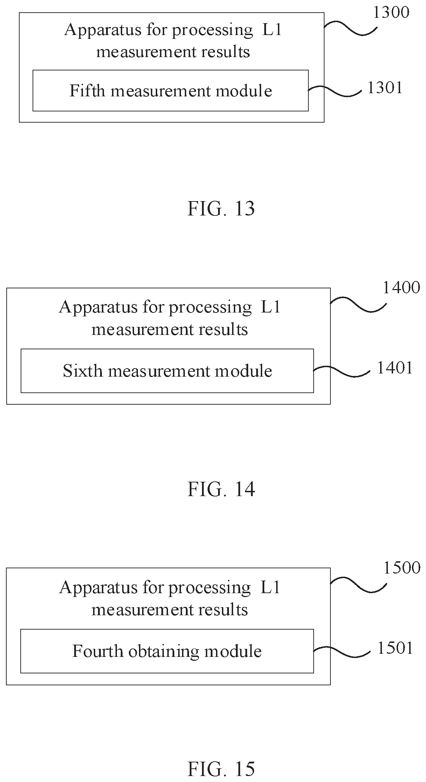

As shown in FIG. 13, an embodiment of this application provides an apparatus 1300 for processing L1 measurement results, including:
a fifth measurement module 1301, configured to perform L3 measurement on a cell or frequency point associated with L1 measurement configuration information according to a preconfigured cycle or a cycle agreed by a protocol or based on UE implementation; or
perform L3 measurement according to first L3 measurement configuration information, where the first L3 measurement configuration information is L3 measurement configuration information corresponding to L1 resource configuration information associated with L1 report configuration information included in a serving cell of the terminal.

Optionally, the fifth measurement module is configured to:
in a case that a frequency point included in the first L3 measurement configuration information overlaps with a frequency point included in second L3 measurement configuration information, and the terminal has performed L3 measurement according to the second L3 measurement configuration information, perform L3 measurement according to a frequency point in the first L3 measurement configuration information that does not overlap with the frequency point of the second L3 measurement configuration information, where the second L3 measurement configuration information includes a measurement object and a report configuration associated with the measurement object.

Optionally, the first L3 measurement configuration information includes at least one of the following:
a candidate cell identifier;
frequency domain information of a reference signal, where the frequency domain information includes frequency point information;
time domain information of a reference signal or an L3 measurement cycle; and
a measurement quantity, where the measurement quantity is used to indicate a measurement quantity of a reference signal measured by a terminal.

Optionally, a candidate cell identifier included in the first L3 measurement configuration information is the same as a cell identifier in the L1 resource configuration information, or frequency point information included in the first L3 measurement configuration information is the same as frequency point information in the L1 resource configuration information.

As shown in FIG. 14, an embodiment of this application provides an apparatus 1400 for processing L1 measurement results, including:
a sixth measurement module 1401, configured to: in a case that a measurement object or report configuration associated with a target frequency point is configured in second L3 measurement configuration information, perform L3 measurement according to a first measurement cycle or based on a first measurement cycle and a second measurement cycle, where the second measurement cycle is an original measurement cycle corresponding to the second L3 measurement configuration information, the first measurement cycle is greater than the second measurement cycle, the first measurement cycle is a cycle configured by a network, agreed by a protocol, or determined based on UE implementation, the second L3 measurement configuration information includes a measurement object and a report configuration associated with the measurement object, and the target frequency point is a frequency point corresponding to L1 measurement configuration information associated with a serving cell.

Optionally, the sixth measurement module is configured to perform at least one of the following:
in a case that first control signaling has been received, performing L3 measurement according to the first measurement cycle or according to the first measurement cycle and the second measurement cycle, where the first control signaling is used to indicate the terminal to perform L3 measurement based on the first measurement cycle; and
performing L3 measurement according to the first measurement cycle within a first part duration of a third measurement cycle, and performing L3 measurement according to the second measurement cycle within a second part duration of the third measurement cycle.

Optionally, the sixth measurement module is configured to perform at least one of the following:
performing L3 measurement on a serving cell according to the first measurement cycle; and
performing L3 measurement on a neighboring cell using a same radio access technology intra-RAT according to the first measurement cycle.

Optionally, a start time of the third measurement cycle is a time at which the terminal receives L1 measurement configuration information or L1 report configuration information, or a time at which the terminal receives the first control signaling, or a time derived by the terminal according to a message including the third measurement cycle, where the first control signaling is used to indicate the terminal to perform L3 measurement based on the first measurement cycle.

Optionally, the apparatus in the embodiments of this application further includes:
a seventh processing module, configured to: after the sixth measurement module performs L3 measurement according to the first measurement cycle or based on the first measurement cycle and the second measurement cycle, skip reporting an L3 measurement result corresponding to the L3 measurement.

As shown in FIG. 15, an embodiment of this application provides an apparatus 1500 for processing L1 measurement results, including:
a fourth obtaining module 1501, configured to obtain a second L1 measurement report; where
the second L1 measurement report includes at least one of the following:
   indication information indicating whether a cell associated with an L1 report configuration has a valid L1 measurement result;
   an L1 measurement result of a reference signal from a cell having a valid L1 measurement result; and
   the number of valid L1 measurement results of reference signals from a cell associated with an L1 report configuration or indication information indicating whether a reference signal associated with the cell has a valid L1 measurement result.

The apparatus for processing L1 measurement results provided in this embodiment of this application can implement various processes implemented by the method embodiments shown in FIG. 2 to FIG. 8, and achieve the same technical effects, which will not be repeated here to avoid repetition.

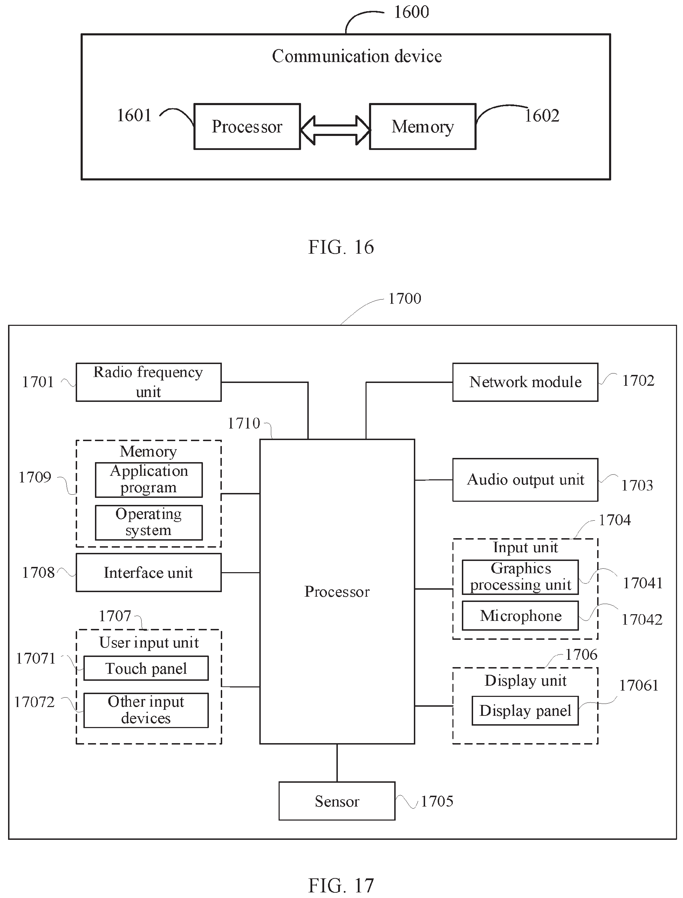

Optionally, as shown in FIG. 16, an embodiment of this application further provides a communication device 1600, including a processor 1601 and a memory 1602. The memory 1602 stores a program or an instruction that can be run on the processor 1601. For example, in a case that the communication device 1600 is a terminal, when the program or instruction is executed by the processor 1601, the various steps of the embodiments of the method for processing L1 measurement results executed by the terminal described above are implemented, with the same technical effects achieved. In a case that the communication device 1600 is a network-side device, when the program or instruction is executed by the processor 1601, the various steps of the embodiments of the method executed by the network-side device described above are implemented, with the same technical effects achieved, which will not be repeated here to avoid repetition.

An embodiment of this application further provides a terminal, including a processor and a communication interface. The processor is configured to: in a case that the number of valid L1 measurement results of reference signals from cells corresponding to L1 resource configuration information associated with a reporting occasion is less than or equal to a preset reporting number, include first content in a first L1 measurement report associated with the reporting occasion, where the first content is used to indicate invalid L1 measurement results in the first L1 measurement report. This terminal embodiment corresponds to the above terminal-side method embodiment, and various implementation processes and implementation manners of the above method embodiment can all be applied to this terminal embodiment, with the same technical effects achieved. Specifically, FIG. 17 is a schematic diagram of a hardware structure of a terminal implementing an embodiment of this application.

The terminal 1700 includes but is not limited to: at least some components among a radio frequency unit 1701, a network module 1702, an audio output unit 1703, an input unit 1704, a sensor 1705, a display unit 1706, a user input unit 1707, an interface unit 1708, a memory 1709, and a processor 1710.

Those skilled in the art can understand that the terminal 1700 may further include a power supply (such as a battery) for supplying power to various components, and the power supply may be logically connected to the processor 1710 through a power management system, thereby implementing functions such as charging, discharging, and power consumption management through the power management system. The terminal structure shown in FIG. 17 does not constitute a limitation on the terminal, and the terminal may include more or fewer components than illustrated, or have certain components combined, or have different components arranged, which will not be described in detail herein.

It should be understood that, in the embodiments of this application, the input unit 1704 may include a graphics processing unit (Graphics Processing Unit, GPU) 17041 and a microphone 17042, and the graphics processing unit 17041 processes image data of still pictures or videos obtained by an image capture device (such as a camera) in a video capture mode or an image capture mode. The display unit 1706 may include a display panel 17061, and the display panel 17061 may be configured in the form of a liquid crystal display, an organic light-emitting diode, or the like. The user input unit 1707 includes at least one of a touch panel 17071 and other input devices 17072. The touch panel 17071 is also referred to as a touch screen. The touch panel 17071 may include two parts: a touch detection device and a touch controller. The other input devices 17072 may include, but are not limited to, a physical keyboard, a function key (such as a volume control key or a switch key), a trackball, a mouse, and a joystick, which will not be described in detail herein.

In the embodiments of this application, after receiving downlink data from a network-side device, the radio frequency unit 1701 may transmit it to the processor 1710 for processing. In addition, the radio frequency unit 1701 may send uplink data to the network-side device. Generally, the radio frequency unit 1701 includes, but is not limited to, an antenna, an amplifier, a transceiver, a coupler, a low noise amplifier, a duplexer, and the like.

The memory 1709 can be configured to store software programs or instructions as well as various data. The memory 1709 may mainly include a first storage area storing programs or instructions and a second storage area storing data. The first storage area may store an operating system, an application program or an instruction required for at least one function (such as a sound play function or an image play function), and the like. In addition, the memory 1709 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous connection dynamic random access memory (Synch link DRAM, SLDRAM), and a direct memory bus random access memory (Direct Rambus RAM, DRRAM). The memory 1709 in the embodiments of this application includes, but is not limited to, these and any other suitable types of memories.

The processor 1710 may include one or more processing units. Optionally, the processor 1710 integrates an application processor and a modem processor. The application processor mainly processes operations of an operating system, a user interface, and an application program, and the modem processor mainly processes wireless communication signals, such as a baseband processor. It can be understood that the above modem processor may not be integrated into the processor 1710.

The processor 1710 is configured to: in a case that the number of valid L1 measurement results of reference signals from cells corresponding to L1 resource configuration information associated with a reporting occasion is less than or equal to a preset reporting number, include first content in a first L1 measurement report associated with the reporting occasion, where the first content is used to indicate invalid L1 measurement results in the first L1 measurement report.

Optionally, the first content includes any one of the following:
an invalid measurement value, where the invalid measurement value is used to indicate that an L1 measurement result of the cell or a reference signal from the cell is an invalid L1 measurement result; and
a repeated measurement result; where
the first L1 measurement report is required to include L1 measurement results of N cells, the first L1 measurement report includes valid L1 measurement results of M cells and repeated measurement results of valid L1 measurement results of P cells among the M cells, and the repeated measurement results of the P cells are used to indicate that L1 measurement results of N-M cells or reference signals from the N-M cells are invalid L1 measurement results, where N is greater than M, M is greater than or equal to P, and M, N, and P are each positive integers; or
the first L1 measurement report is required to include L1 measurement results of T reference signals from S cells, the first L1 measurement report includes valid L1 measurement results of T reference signals from S1 first cells, and includes valid L1 measurement results of Q reference signals from S2 second cells and repeated measurement results of valid L1 measurement results of K reference signals among the Q reference signals from each of the second cells, and the repeated measurement results of the valid L1 measurement results of the K reference signals from each of the second cells are used to indicate that L1 measurement results of T-Q reference signals from the second cell are invalid L1 measurement results, where S, S1, S2, T, Q, and K are each positive integers, T is greater than Q and S is greater than S1, S is greater than S2, and K is less than or equal to Q.

Optionally, the radio frequency unit 1701 is further configured to:
in a case that a reporting type corresponding to the first L1 measurement report is periodic reporting, semi-persistent reporting on PUCCH, semi-persistent reporting on PUSCH, or aperiodic reporting on PUSCH, send the first L1 measurement report.

Optionally, the processor 1710 is further configured to perform at least one of the following:
not expecting a network-side device to send, based on an invalid L1 measurement result, a transmission configuration indicator state TCI state activation command for a related reference signal to the terminal;
not expecting a network-side device to include, in a handover command based on an invalid L1 measurement result, a TCI state of a related reference signal; and
not expecting a network-side device to include, based on an invalid L1 measurement result and in a physical downlink control channel PDCCH command for triggering UE to obtain timing advance in advance, a reference signal index associated with the first L1 measurement report.

Optionally, the radio frequency unit 1701 is further configured to perform at least one of the following:
sending first indication information in a case that all valid L1 measurement results corresponding to L1 resource configuration information associated with a reporting occasion have not been obtained; and
sending second indication information in a case that an obtained L1 measurement result is a valid L1 measurement result associated with a reporting occasion, and the reporting occasion is a reporting occasion ignored by a network-side device; where
the first indication information is used to indicate at least one of the following:
   no valid L1 measurement result on a first reporting occasion, where the first reporting occasion includes at least one reporting occasion located after a first time and associated with a report configuration identifier in the first indication information, and the first time is a time at which a network-side device receives the first indication information, and
   no valid L1 measurement result on a second reporting occasion, where the second reporting occasion includes at least one reporting occasion located after the first time; and
   the second indication information is used to indicate at least one of the following:
      monitoring a third reporting occasion, where the third reporting occasion includes at least one reporting occasion located after a second time and associated with a report configuration identifier in the second indication information, and the second time is a time at which a network-side device receives the second indication information, and
      monitoring a fourth reporting occasion, where the fourth reporting occasion includes at least one reporting occasion located after the second time.

Optionally, the first indication information includes at least one of the following:
a deactivation indication or an ignore indication, and
the report configuration identifier; or
the second indication information includes at least one of the following:
   an activation indication or a stop-ignoring indication, and
   the report configuration identifier.

Optionally, the radio frequency unit 1701 is further configured to:
send a second L1 measurement report; where
the second L1 measurement report includes at least one of the following:
   indication information indicating whether a cell associated with an L1 report configuration has a valid L1 measurement result;
   an L1 measurement result of a reference signal from a cell having a valid L1 measurement result; and
   the number of valid L1 measurement results of reference signals from a cell associated with an L1 report configuration or indication information indicating whether a reference signal associated with the cell has a valid L1 measurement result.

Optionally, the processor 1710 is further configured to:
in a case that an L3 measurement result of a serving cell is not lower than a threshold associated with a serving cell measurement configuration, and the neighboring cell is a candidate cell associated with L1 measurement, perform L3 measurement on the neighboring cell.

Optionally, the processor 1710 is further configured to perform at least one of the following:
performing L3 measurement on the neighboring cell based on a first measurement cycle, where the first measurement cycle is greater than a second measurement cycle, the second measurement cycle is an original measurement cycle corresponding to second L3 measurement configuration information, the first measurement cycle is a cycle configured by a network, agreed by a protocol, or determined based on UE implementation, and the second L3 measurement configuration information includes a measurement object and a report configuration associated with the measurement object;
performing measurement on an L3 measurement frequency point on which a neighboring cell is; and
ignoring a threshold included in the serving cell measurement configuration.

Optionally, the processor 1710 is further configured to:
skip reporting or skip triggering reporting of an L3 measurement result corresponding to L3 measurement of the neighboring cell.

Optionally, the processor 1710 is further configured to:
perform L3 measurement on a cell or frequency point associated with L1 measurement configuration information according to a preconfigured cycle or a cycle agreed by a protocol or based on UE implementation; or
perform L3 measurement according to first L3 measurement configuration information, where the first L3 measurement configuration information is L3 measurement configuration information corresponding to L1 resource configuration information associated with L1 report configuration information included in a serving cell of the terminal.

Optionally, the processor 1710 is further configured to:
in a case that a frequency point included in the first L3 measurement configuration information overlaps with a frequency point included in second L3 measurement configuration information, and the terminal has performed L3 measurement according to the second L3 measurement configuration information, perform L3 measurement according to a frequency point in the first L3 measurement configuration information that does not overlap with the frequency point of the second L3 measurement configuration information, where the second L3 measurement configuration information includes a measurement object and a report configuration associated with the measurement object.

Optionally, the first L3 measurement configuration information includes at least one of the following:
a candidate cell identifier;
frequency domain information of a reference signal, where the frequency domain information includes frequency point information;
time domain information of a reference signal or an L3 measurement cycle; and
a measurement quantity, where the measurement quantity is used to indicate a measurement quantity of a reference signal measured by a terminal.

Optionally, a candidate cell identifier included in the first L3 measurement configuration information is the same as a cell identifier in the L1 resource configuration information, or frequency point information included in the first L3 measurement configuration information is the same as frequency point information in the L1 resource configuration information.

Optionally, the processor 1710 is further configured to:
in a case that a measurement object or report configuration associated with a target frequency point is configured in second L3 measurement configuration information, perform L3 measurement according to a first measurement cycle or based on a first measurement cycle and a second measurement cycle, where the second measurement cycle is an original measurement cycle corresponding to the second L3 measurement configuration information, the first measurement cycle is greater than the second measurement cycle, the first measurement cycle is a cycle configured by a network, agreed by a protocol, or determined based on UE implementation, the second L3 measurement configuration information includes a measurement object and a report configuration associated with the measurement object, and the target frequency point is a frequency point corresponding to L1 measurement configuration information associated with a serving cell.

Optionally, the processor 1710 is further configured to perform at least one of the following:
in a case that first control signaling has been received, performing L3 measurement according to the first measurement cycle or according to the first measurement cycle and the second measurement cycle, where the first control signaling is used to indicate the terminal to perform L3 measurement based on the first measurement cycle; and
performing L3 measurement according to the first measurement cycle within a first part duration of a third measurement cycle, and performing L3 measurement according to the second measurement cycle within a second part duration of the third measurement cycle.

Optionally, the processor 1710 is further configured to perform at least one of the following:
performing L3 measurement on a serving cell according to the first measurement cycle; and
performing L3 measurement on a neighboring cell using a same radio access technology intra-RAT according to the first measurement cycle.

Optionally, a start time of the third measurement cycle is a time at which the terminal receives L1 measurement configuration information or L1 report configuration information, or a time at which the terminal receives the first control signaling, or a time derived by the terminal according to a message including the third measurement cycle, where the first control signaling is used to indicate the terminal to perform L3 measurement based on the first measurement cycle.

Optionally, the processor 1710 is further configured to:
skip reporting an L3 measurement result corresponding to the L3 measurement.

In the embodiments of this application, in a case that the number of valid L1 measurement results of reference signals from cells corresponding to the L1 resource configuration information associated with the reporting occasion is less than or equal to the preset reporting number, the terminal includes the first content in the first L1 measurement report associated with the reporting occasion, where the first content is used to indicate the invalid L1 measurement results in the first L1 measurement report. With the first content, a network side can learn the invalid L1 measurement results in the first L1 measurement report, and thus can determine L1 measurement results in the first L1 measurement report other than the invalid L1 measurement results as valid L1 measurement results, ensuring consistency in L1 measurement result understanding between the network side and the terminal.

In the embodiments of this application, the processor 1710 is configured to:
send a second L1 measurement report; where
the second L1 measurement report includes at least one of the following:
   indication information indicating whether a cell associated with an L1 report configuration has a valid L1 measurement result;
   an L1 measurement result of a reference signal from a cell having a valid L1 measurement result; and
   the number of valid L1 measurement results of reference signals from a cell associated with an L1 report configuration or indication information indicating whether a reference signal associated with the cell has a valid L1 measurement result.

In the embodiments of this application, the processor 1710 is configured to:
in a case that an L3 measurement result of a serving cell is not lower than a threshold associated with a serving cell measurement configuration, and a neighboring cell is a candidate cell associated with L1 measurement, perform L3 measurement on the neighboring cell.

Optionally, the processor 1710 is further configured to perform at least one of the following:
performing L3 measurement on the neighboring cell based on a first measurement cycle, where the first measurement cycle is greater than a second measurement cycle, the second measurement cycle is an original measurement cycle corresponding to second L3 measurement configuration information, the first measurement cycle is a cycle configured by a network, agreed by a protocol, or determined based on UE implementation, and the second L3 measurement configuration information includes a measurement object and a report configuration associated with the measurement object;
performing measurement on an L3 measurement frequency point on which a neighboring cell is; and
ignoring a threshold included in the serving cell measurement configuration.

Optionally, the processor 1710 is further configured to:
skip reporting or skip triggering reporting of an L3 measurement result corresponding to L3 measurement of the neighboring cell.

In the embodiments of this application, the processor 1710 is configured to:
perform L3 measurement on a cell or frequency point associated with L1 measurement configuration information according to a preconfigured cycle or a cycle agreed by a protocol or based on UE implementation; or
perform L3 measurement according to first L3 measurement configuration information, where the first L3 measurement configuration information is L3 measurement configuration information corresponding to L1 resource configuration information associated with L1 report configuration information included in a serving cell of the terminal.

Optionally, the processor 1710 is further configured to:
in a case that a frequency point included in the first L3 measurement configuration information overlaps with a frequency point included in second L3 measurement configuration information, and the terminal has performed L3 measurement according to the second L3 measurement configuration information, perform L3 measurement according to a frequency point in the first L3 measurement configuration information that does not overlap with the frequency point of the second L3 measurement configuration information, where the second L3 measurement configuration information includes a measurement object and a report configuration associated with the measurement object.

Optionally, the first L3 measurement configuration information includes at least one of the following:
a candidate cell identifier;
frequency domain information of a reference signal, where the frequency domain information includes frequency point information;
time domain information of a reference signal or an L3 measurement cycle; and
a measurement quantity, where the measurement quantity is used to indicate a measurement quantity of a reference signal measured by a terminal.

Optionally, a candidate cell identifier included in the first L3 measurement configuration information is the same as a cell identifier in the L1 resource configuration information, or frequency point information included in the first L3 measurement configuration information is the same as frequency point information in the L1 resource configuration information.

In the embodiments of this application, the processor 1710 is configured to:
in a case that a measurement object or report configuration associated with a target frequency point is configured in second L3 measurement configuration information, perform L3 measurement according to a first measurement cycle or based on a first measurement cycle and a second measurement cycle, where the second measurement cycle is an original measurement cycle corresponding to the second L3 measurement configuration information, the first measurement cycle is greater than the second measurement cycle, the first measurement cycle is a cycle configured by a network, agreed by a protocol, or determined based on UE implementation, the second L3 measurement configuration information includes a measurement object and a report configuration associated with the measurement object, and the target frequency point is a frequency point corresponding to L1 measurement configuration information associated with a serving cell.

Optionally, the processor 1710 is further configured to perform at least one of the following:
in a case that first control signaling has been received, performing L3 measurement according to the first measurement cycle or according to the first measurement cycle and the second measurement cycle, where the first control signaling is used to indicate the terminal to perform L3 measurement based on the first measurement cycle; and
performing L3 measurement according to the first measurement cycle within a first part duration of a third measurement cycle, and performing L3 measurement according to the second measurement cycle within a second part duration of the third measurement cycle.

Optionally, the performing L3 measurement according to a first measurement cycle includes at least one of the following:
performing L3 measurement on a serving cell according to the first measurement cycle; and
performing L3 measurement on a neighboring cell using a same radio access technology intra-RAT according to the first measurement cycle.

Optionally, a start time of the third measurement cycle is a time at which the terminal receives L1 measurement configuration information or L1 report configuration information, or a time at which the terminal receives the first control signaling, or a time derived by the terminal according to a message including the third measurement cycle, where the first control signaling is used to indicate the terminal to perform L3 measurement based on the first measurement cycle.

Optionally, the processor 1710 is further configured to skip reporting an L3 measurement result corresponding to the L3 measurement.

An embodiment of this application further provides a network-side device, including a processor and a communication interface. The communication interface is configured to obtain a first L1 measurement report, where the first L1 measurement report includes first content, and the first content is used to indicate invalid L1 measurement results in the first L1 measurement report. Alternatively, the communication interface is configured to obtain a second L1 measurement report; where the second L1 measurement report includes at least one of the following: indication information indicating whether a cell associated with an L1 report configuration has a valid L1 measurement result; an L1 measurement result of a reference signal from a cell having a valid L1 measurement result; and the number of valid L1 measurement results of reference signals from a cell associated with an L1 report configuration or indication information indicating whether a reference signal associated with the cell has a valid L1 measurement result. This network-side device embodiment corresponds to the above network-side device method embodiment, and various implementation processes and implementation manners of the above method embodiment can all be applied to this network-side device embodiment, with the same technical effects achieved.

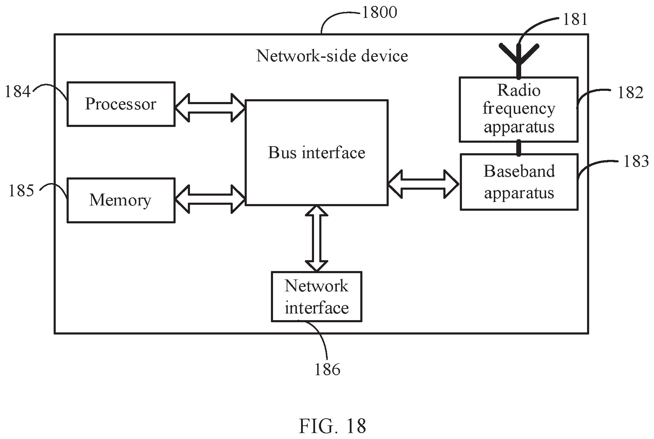

Specifically, an embodiment of this application further provides a network-side device. As shown in FIG. 18, the network-side device 1800 includes: an antenna 181, a radio frequency apparatus 182, a baseband apparatus 183, a processor 184, and a memory 185. The antenna 181 is connected to the radio frequency apparatus 182. In uplink, the radio frequency apparatus 182 receives information through the antenna 181 and sends the received information to the baseband apparatus 183 for processing. In downlink, the baseband apparatus 183 processes information to be sent and sends it to the radio frequency apparatus 182, and the radio frequency apparatus 182 processes the received information and sends it through the antenna 181.

The method executed by the network-side device in the above embodiments can be implemented in the baseband apparatus 183, and the baseband apparatus 183 includes a baseband processor.

The baseband apparatus 183 may include, for example, at least one baseband board, and a plurality of chips are provided on the baseband board. As shown in FIG. 18, one chip is, for example, a baseband processor connected to the memory 185 through a bus interface, to call a program in the memory 185, and execute the network device operations shown in the above method embodiments.

The network-side device may further include a network interface 186, and the interface is, for example, a common public radio interface (Common Public Radio Interface, CPRI).

Specifically, the network-side device 1800 in the embodiments of this application further includes an instruction or a program stored on the memory 185 and operable on the processor 184. The processor 184 calls the instruction or program in the memory 185 to execute the methods performed by various modules shown in FIG. 10 or FIG. 15, with the same technical effects achieved. Details are not repeated here to avoid repetition.

An embodiment of this application further provides a readable storage medium. The readable storage medium stores a program or an instruction, and when the program or instruction is executed by a processor, various processes of the above embodiments of the method for processing L1 measurement results are implemented, with the same technical effects achieved. Details are not repeated here to avoid repetition.

The processor is a processor in the terminal described in the above embodiments. The readable storage medium includes a computer-readable storage medium, such as a ROM, a RAM, a magnetic disk, or an optical disk. In some examples, the readable storage medium may be a non-transitory readable storage medium.

An embodiment of this application further provides a chip, and the chip includes a processor and a communication interface. The communication interface and the processor are coupled, and the processor is configured to run a program or an instruction to implement various processes of the above embodiments of the method for processing L1 measurement results, with the same technical effects achieved. Details are not repeated here to avoid repetition.

It should be understood that the chip mentioned in the embodiments of this application may also be referred to as a system-level chip, a system chip, a chip system, or a system-on-chip.

An embodiment of this application further provides a computer program/program product. The computer program/program product is stored in a storage medium, and the computer program/program product is executed by at least one processor to implement various processes of the above embodiments of the method for processing L1 measurement results, with the same technical effects achieved. Details are not repeated here to avoid repetition.

An embodiment of this application further provides a processing system for L1 measurement results, including: a terminal and a network-side device. The terminal is configured to perform the steps of the method for processing L1 measurement results executed by the terminal as described above, and the network-side device is configured to perform the steps of the method for processing L1 measurement results executed by the network-side device as described above.

It should be noted that, in the specification, the terms "include", "comprise" or any other variant thereof are intended to cover non-exclusive inclusion, so that a process, method, article, or apparatus that includes a series of elements not only includes those elements, but also includes other elements not explicitly listed, or elements inherent to such process, method, article, or apparatus. Without further limitation, an element defined by the statement "including a ..." does not exclude the presence of additional identical elements in the process, method, article, or apparatus that includes the element. In addition, it should be pointed out that the scope of the methods and apparatuses in the embodiments of this application is not limited to performing functions in the order shown or discussed, and may alternatively include performing functions substantially simultaneously or in the reverse order according to the functions involved. For example, the described method may be performed in a different order than described, and various steps may also be added, omitted, or combined. In addition, features described with reference to certain examples may be combined in other examples.

Through the description of the above embodiments, those skilled in the art can clearly understand that the methods of the above embodiments can be implemented by means of a computer software product plus a necessary general hardware platform, and certainly, can alternatively be implemented by hardware. The computer software product is stored in a storage medium (such as a ROM, a RAM, a magnetic disk, or an optical disk) and includes several instructions to make a terminal or network-side device execute the methods described in various embodiments of this application.

The embodiments of this application have been described above in conjunction with the accompanying drawings, but this application is not limited to the foregoing embodiments described above. The foregoing embodiments are merely illustrative rather than restrictive. Those of ordinary skill in the art, under the inspiration of this application, can make many forms of embodiments without departing from the spirit of this application and the scope of the claims, and these embodiments all shall fall under the protection scope of this application.

## Claims

1. A method for processing layer 1 L1 measurement results, comprising:
in a case that the number of valid L1 measurement results of reference signals from cells corresponding to L1 resource configuration information associated with a reporting occasion is less than or equal to a preset reporting number, comprising, by a terminal, first content in a first L1 measurement report associated with the reporting occasion, wherein the first content is used to indicate invalid L1 measurement results in the first L1 measurement report.

2. The method according to claim 1, wherein the first content comprises any one of the following:
an invalid measurement value, wherein the invalid measurement value is used to indicate that an L1 measurement result of the cell or a reference signal from the cell is an invalid L1 measurement result; and
a repeated measurement result; wherein
the first L1 measurement report is required to comprise L1 measurement results of N cells, the first L1 measurement report comprises valid L1 measurement results of M cells and repeated measurement results of valid L1 measurement results of P cells among the M cells, and the repeated measurement results of the P cells are used to indicate that L1 measurement results of N-M cells or reference signals from the N-M cells are invalid L1 measurement results, wherein N is greater than M, M is greater than or equal to P, and M, N, and P are each positive integers; or
the first L1 measurement report is required to comprise L1 measurement results of T reference signals from S cells, the first L1 measurement report comprises valid L1 measurement results of T reference signals from S1 first cells, and comprises valid L1 measurement results of Q reference signals from S2 second cells and repeated measurement results of valid L1 measurement results of K reference signals among the Q reference signals from each of the second cells, and the repeated measurement results of the valid L1 measurement results of the K reference signals from each of the second cells are used to indicate that L1 measurement results of T-Q reference signals from the second cell are invalid L1 measurement results, wherein S, S1, S2, T, Q, and K are each positive integers, T is greater than Q and S is greater than S1, S is greater than S2, and K is less than or equal to Q.

3. The method according to claim 1 or 2, further comprising:
in a case that a reporting type corresponding to the first L1 measurement report is periodic reporting, semi-persistent reporting on PUCCH, semi-persistent reporting on PUSCH, or aperiodic reporting on PUSCH, sending the first L1 measurement report.

4. The method according to any one of claims 1 to 3, further comprising at least one of the following:
not expecting, by the terminal, a network-side device to send, based on an invalid L1 measurement result, a transmission configuration indicator state TCI state activation command for a related reference signal to the terminal;
not expecting, by the terminal, a network-side device to comprise, in a handover command based on an invalid L1 measurement result, a TCI state of a related reference signal; and
not expecting, by the terminal, a network-side device to comprise, based on an invalid L1 measurement result and in a physical downlink control channel PDCCH command for triggering UE to obtain timing advance in advance, a reference signal index associated with the first L1 measurement report.

5. The method according to claim 1, further comprising at least one of the following:
sending first indication information in a case that all valid L1 measurement results corresponding to L1 resource configuration information associated with a reporting occasion have not been obtained; and
sending second indication information in a case that an obtained L1 measurement result is a valid L1 measurement result associated with a reporting occasion, and the reporting occasion is a reporting occasion ignored by a network-side device; wherein
the first indication information is used to indicate at least one of the following:
no valid L1 measurement result on a first reporting occasion, wherein the first reporting occasion comprises at least one reporting occasion located after a first time and associated with a report configuration identifier in the first indication information, and the first time is a time at which a network-side device receives the first indication information, and
no valid L1 measurement result on a second reporting occasion, wherein the second reporting occasion comprises at least one reporting occasion located after the first time; and
the second indication information is used to indicate at least one of the following:
monitoring a third reporting occasion, wherein the third reporting occasion comprises at least one reporting occasion located after a second time and associated with a report configuration identifier in the second indication information, and the second time is a time at which a network-side device receives the second indication information, and
monitoring a fourth reporting occasion, wherein the fourth reporting occasion comprises at least one reporting occasion located after the second time.

6. The method according to claim 5, wherein the first indication information comprises at least one of the following:
a deactivation indication or an ignore indication, and
the report configuration identifier; or
the second indication information comprises at least one of the following:
an activation indication or a stop-ignoring indication, and
the report configuration identifier.

7. The method according to claim 1, further comprising:
sending a second L1 measurement report; wherein
the second L1 measurement report comprises at least one of the following:
indication information indicating whether a cell associated with an L1 report configuration has a valid L1 measurement result;
an L1 measurement result of a reference signal from a cell having a valid L1 measurement result; and
the number of valid L1 measurement results of reference signals from a cell associated with an L1 report configuration or indication information indicating whether a reference signal associated with the cell has a valid L1 measurement result.

8. The method according to claim 1, further comprising:
in a case that an L3 measurement result of a serving cell is not lower than a threshold associated with a serving cell measurement configuration, and the neighboring cell is a candidate cell associated with L1 measurement, performing, by a terminal, L3 measurement on the neighboring cell.

9. The method according to claim 8, wherein the performing, by a terminal, L3 measurement on the neighboring cell comprises at least one of the following:
performing L3 measurement on the neighboring cell based on a first measurement cycle, wherein the first measurement cycle is greater than a second measurement cycle, the second measurement cycle is an original measurement cycle corresponding to second L3 measurement configuration information, the first measurement cycle is a cycle configured by a network, agreed by a protocol, or determined based on UE implementation, and the second L3 measurement configuration information comprises a measurement object and a report configuration associated with the measurement object;
performing measurement on an L3 measurement frequency point on which a neighboring cell is; and
ignoring a threshold comprised in the serving cell measurement configuration.

10. The method according to claim 8 or 9, after the performing, by a terminal, L3 measurement on the neighboring cell, further comprising:
skipping reporting or skipping triggering reporting of an L3 measurement result corresponding to L3 measurement of the neighboring cell.

11. The method according to claim 1, further comprising:
performing L3 measurement on a cell or frequency point associated with L1 measurement configuration information according to a preconfigured cycle or a cycle agreed by a protocol or based on UE implementation; or
performing L3 measurement according to first L3 measurement configuration information, wherein the first L3 measurement configuration information is L3 measurement configuration information corresponding to L1 resource configuration information associated with L1 report configuration information comprised in a serving cell of the terminal.

12. The method according to claim 11, wherein the performing L3 measurement according to first L3 measurement configuration information comprises:
in a case that a frequency point comprised in the first L3 measurement configuration information overlaps with a frequency point comprised in second L3 measurement configuration information, and the terminal has performed L3 measurement according to the second L3 measurement configuration information, performing L3 measurement according to a frequency point in the first L3 measurement configuration information that does not overlap with the frequency point of the second L3 measurement configuration information, wherein the second L3 measurement configuration information comprises a measurement object and a report configuration associated with the measurement object.

13. The method according to claim 11 or 12, wherein the first L3 measurement configuration information comprises at least one of the following:
a candidate cell identifier;
frequency domain information of a reference signal, wherein the frequency domain information comprises frequency point information;
time domain information of a reference signal or an L3 measurement cycle; and
a measurement quantity, wherein the measurement quantity is used to indicate a measurement quantity of a reference signal measured by a terminal.

14. The method according to any one of claims 11 to 13, wherein a candidate cell identifier comprised in the first L3 measurement configuration information is the same as a cell identifier in the L1 resource configuration information, or frequency point information comprised in the first L3 measurement configuration information is the same as frequency point information in the L1 resource configuration information.

15. The method according to claim 1, further comprising:
in a case that a measurement object or report configuration associated with a target frequency point is configured in second L3 measurement configuration information, performing L3 measurement according to a first measurement cycle or based on a first measurement cycle and a second measurement cycle, wherein the second measurement cycle is an original measurement cycle corresponding to the second L3 measurement configuration information, the first measurement cycle is greater than the second measurement cycle, the first measurement cycle is a cycle configured by a network, agreed by a protocol, or determined based on UE implementation, the second L3 measurement configuration information comprises a measurement object and a report configuration associated with the measurement object, and the target frequency point is a frequency point corresponding to L1 measurement configuration information associated with a serving cell.

16. The method according to claim 15, wherein the performing L3 measurement according to a first measurement cycle or based on a first measurement cycle and a second measurement cycle comprises at least one of the following:
in a case that first control signaling has been received, performing L3 measurement according to the first measurement cycle or according to the first measurement cycle and the second measurement cycle, wherein the first control signaling is used to indicate the terminal to perform L3 measurement based on the first measurement cycle; and
performing L3 measurement according to the first measurement cycle within a first part duration of a third measurement cycle, and performing L3 measurement according to the second measurement cycle within a second part duration of the third measurement cycle.

17. The method according to claim 15, wherein the performing L3 measurement according to a first measurement cycle comprises at least one of the following:
performing L3 measurement on a serving cell according to the first measurement cycle; and
performing L3 measurement on a neighboring cell using a same radio access technology intra-RAT according to the first measurement cycle.

18. The method according to claim 16, wherein a start time of the third measurement cycle is a time at which the terminal receives L1 measurement configuration information or L1 report configuration information, or a time at which the terminal receives the first control signaling, or a time derived by the terminal according to a message comprising the third measurement cycle, wherein the first control signaling is used to indicate the terminal to perform L3 measurement based on the first measurement cycle.

19. The method according to any one of claims 15 to 18, after the performing L3 measurement according to a first measurement cycle or based on a first measurement cycle and a second measurement cycle, further comprising:
skipping reporting an L3 measurement result corresponding to the L3 measurement.

20. A method for processing L1 measurement results, comprising:
obtaining, by a network-side device, a first L1 measurement report, wherein the first L1 measurement report comprises first content, and the first content is used to indicate invalid L1 measurement results in the first L1 measurement report.

21. The method according to claim 20, wherein the first content comprises any one of the following:
an invalid measurement value, wherein the invalid measurement value is used to indicate that an L1 measurement result of the cell or a reference signal from the cell is an invalid L1 measurement result; and
a repeated measurement result; wherein
the first L1 measurement report is required to comprise L1 measurement results of N cells, the first L1 measurement report comprises valid L1 measurement results of M cells and repeated measurement results of valid L1 measurement results of P cells among the M cells, and the repeated measurement results of the P cells are used to indicate that L1 measurement results of N-M cells or reference signals from the N-M cells are invalid L1 measurement results, wherein N is greater than M, M is greater than or equal to P, and M, N, and P are each positive integers; or
the first L1 measurement report is required to comprise L1 measurement results of T reference signals from S cells, the first L1 measurement report comprises valid L1 measurement results of T reference signals from S1 first cells, and comprises valid L1 measurement results of Q reference signals from S2 second cells and repeated measurement results of valid L1 measurement results of K reference signals among the Q reference signals from each of the second cells, and the repeated measurement results of the valid L1 measurement results of the K reference signals from each of the second cells are used to indicate that L1 measurement results of T-Q reference signals from the second cell are invalid L1 measurement results, wherein S, S1, S2, T, Q, and K are each positive integers, T is greater than Q and S is greater than S1, S is greater than S2, and K is less than or equal to Q.

22. The method according to claim 20, wherein after the obtaining a first L1 measurement report, the method further comprises at least one of the following:
skipping sending, to a terminal based on the invalid L1 measurement result, a TCI state activation command for a related reference signal;
skipping containing, in a handover command based on the invalid L1 measurement result, a TCI state of a related reference signal; and
skipping containing, in a PDCCH command for triggering UE to obtain timing advance in advance based on the invalid L1 measurement result, a reference signal index associated with the first L1 measurement report.

23. The method according to claim 20, further comprising:
obtaining first indication information or second indication information; wherein
the first indication information is used to indicate at least one of the following:
no valid L1 measurement result on a first reporting occasion, wherein the first reporting occasion comprises at least one reporting occasion located after a first time and associated with a report configuration identifier in the first indication information, and the first time is a time at which a network-side device receives the first indication information, and
no valid L1 measurement result on a second reporting occasion, wherein the second reporting occasion comprises at least one reporting occasion located after the first time; and
the second indication information is used to indicate at least one of the following:
monitoring a third reporting occasion, wherein the third reporting occasion comprises at least one reporting occasion located after a second time and associated with a report configuration identifier in the second indication information, and the second time is a time at which a network-side device receives the second indication information, and
monitoring a fourth reporting occasion, wherein the fourth reporting occasion comprises at least one reporting occasion located after the second time.

24. The method according to claim 23, wherein the first indication information comprises at least one of the following:
a deactivation indication or an ignore indication, and
the report configuration identifier; or
the second indication information comprises at least one of the following:
an activation indication or a stop-ignoring indication, and
the report configuration identifier.

25. The method according to claim 20, further comprising:
obtaining a second L1 measurement report; wherein
the second L1 measurement report comprises at least one of the following:
indication information indicating whether a cell associated with an L1 report configuration has a valid L1 measurement result;
an L1 measurement result of a reference signal from a cell having a valid L1 measurement result; and
the number of valid L1 measurement results of reference signals from a cell associated with an L1 report configuration or indication information indicating whether a reference signal associated with the cell has a valid L1 measurement result.

26. The method according to claim 20, further comprising:
sending first L3 measurement configuration information, wherein the first L3 measurement configuration information is L3 measurement configuration information corresponding to L1 resource configuration information associated with L1 report configuration information comprised in a serving cell of a terminal.

27. The method according to claim 20, further comprising:
sending first control signaling, wherein the first control signaling is used to indicate a terminal to perform L3 measurement based on a first measurement cycle, the first measurement cycle is greater than a second measurement cycle, the second measurement cycle is an original measurement cycle corresponding to second L3 measurement configuration information, the first measurement cycle is a cycle configured by a network, agreed by a protocol, or determined based on UE implementation, and the second L3 measurement configuration information comprises a measurement object and a report configuration associated with the measurement object.

28. An apparatus for processing L1 measurement results, comprising:
a first processing module, configured to: in a case that the number of valid L1 measurement results of reference signals from cells corresponding to L1 resource configuration information associated with a reporting occasion is less than or equal to a preset reporting number, comprise first content in a first L1 measurement report associated with the reporting occasion, wherein the first content is used to indicate invalid L1 measurement results in the first L1 measurement report.

29. The apparatus according to claim 28, wherein the first content comprises any one of the following:
an invalid measurement value, wherein the invalid measurement value is used to indicate that an L1 measurement result of the cell or a reference signal from the cell is an invalid L1 measurement result; and
a repeated measurement result; wherein
the first L1 measurement report is required to comprise L1 measurement results of N cells, the first L1 measurement report comprises valid L1 measurement results of M cells and repeated measurement results of valid L1 measurement results of P cells among the M cells, and the repeated measurement results of the P cells are used to indicate that L1 measurement results of N-M cells or reference signals from the N-M cells are invalid L1 measurement results, wherein N is greater than M, M is greater than or equal to P, and M, N, and P are each positive integers; or
the first L1 measurement report is required to comprise L1 measurement results of T reference signals from S cells, the first L1 measurement report comprises valid L1 measurement results of T reference signals from S1 first cells, and comprises valid L1 measurement results of Q reference signals from S2 second cells and repeated measurement results of valid L1 measurement results of K reference signals among the Q reference signals from each of the second cells, and the repeated measurement results of the valid L1 measurement results of the K reference signals from each of the second cells are used to indicate that L1 measurement results of T-Q reference signals from the second cell are invalid L1 measurement results, wherein S, S1, S2, T, Q, and K are each positive integers, T is greater than Q and S is greater than S1, S is greater than S2, and K is less than or equal to Q.

30. The apparatus according to claim 28 or 29, further comprising:
a first sending module, configured to send the first L1 measurement report in a case that a reporting type corresponding to the first L1 measurement report is periodic reporting, semi-persistent reporting on PUCCH, semi-persistent reporting on PUSCH, or aperiodic reporting on PUSCH.

31. An apparatus for processing L1 measurement results, comprising:
a first obtaining module, configured to obtain a first L1 measurement report, wherein the first L1 measurement report comprises first content, and the first content is used to indicate invalid L1 measurement results in the first L1 measurement report.

32. The apparatus according to claim 31, wherein the first content comprises any one of the following:
an invalid measurement value, wherein the invalid measurement value is used to indicate that an L1 measurement result of the cell or a reference signal from the cell is an invalid L1 measurement result; and
a repeated measurement result; wherein
the first L1 measurement report is required to comprise L1 measurement results of N cells, the first L1 measurement report comprises valid L1 measurement results of M cells and repeated measurement results of valid L1 measurement results of P cells among the M cells, and the repeated measurement results of the P cells are used to indicate that L1 measurement results of N-M cells or reference signals from the N-M cells are invalid L1 measurement results, wherein N is greater than M, M is greater than or equal to P, and M, N, and P are each positive integers; or
the first L1 measurement report is required to comprise L1 measurement results of T reference signals from S cells, the first L1 measurement report comprises valid L1 measurement results of T reference signals from S1 first cells, and comprises valid L1 measurement results of Q reference signals from S2 second cells and repeated measurement results of valid L1 measurement results of K reference signals among the Q reference signals from each of the second cells, and the repeated measurement results of the valid L1 measurement results of the K reference signals from each of the second cells are used to indicate that L1 measurement results of T-Q reference signals from the second cell are invalid L1 measurement results, wherein S, S1, S2, T, Q, and K are each positive integers, T is greater than Q and S is greater than S1, S is greater than S2, and K is less than or equal to Q.

33. A terminal, comprising a processor and a memory, wherein the memory stores a program or an instruction executable on the processor, and when the program or instruction is executed by the processor, the steps of the method for processing L1 measurement results according to any one of claims 1 to 19 are implemented.

34. A network-side device, comprising a processor and a memory, wherein the memory stores a program or an instruction executable on the processor, and when the program or instruction is executed by the processor, the steps of the method for processing L1 measurement results according to any one of claims 20 to 27 are implemented.

35. A readable storage medium, wherein the readable storage medium stores a program or an instruction, and when the program or instruction is executed by a processor, the steps of the method for processing L1 measurement results according to any one of claims 1 to 19 are implemented, or the steps of the method for processing L1 measurement results according to any one of claims 20 to 27 are implemented.
